(19) Europäisches Patentamt
European Patent Office
Office européen des brevets

(11) Veröffentlichungsnummer: **0 515 972 A1**

(12) **EUROPÄISCHE PATENTANMELDUNG**

(21) Anmeldenummer: **92108515.5**

(51) Int. Cl.5: **C09K 19/38**, G11B 7/24

(22) Anmeldetag: **20.05.92**

(30) Priorität: **25.05.91 DE 4117113**

(43) Veröffentlichungstag der Anmeldung: **02.12.92 Patentblatt 92/49**

(84) Benannte Vertragsstaaten: **DE GB**

(71) Anmelder: **MERCK PATENT GESELLSCHAFT MIT BESCHRÄNKTER HAFTUNG**
**Frankfurter Strasse 250**
**W-6100 Darmstadt(DE)**

(72) Erfinder: **Gray, George William, Prof.**
**Juniper House, Furzehill**
**Wimborne, Dorset BH21 4 HD(GB)**
Erfinder: **Coates, David, Dr.**
**87, Sopwith Crescent, Merley**
**Wimborne, Dorset BH21 3 SW(GB)**

(54) **Polymerisierbare Flüssigkristallmaterialien und ferroelekfrische smekfische, flüssigkristalline Phasen aufweisende Polymerzusammensetzungen.**

(57) Ferroelektrische, smektische flüssigkristalline Phasen aufweisende Polymerzusammensetzungen, direkt oder über einen Spacer chemisch gebundene mesogene Gruppen enthalten, dadurch gekennzeichnet, daß mindestens eine der mesogenen Gruppen mindestens ein querpolarisierendes Strukturelement entsprechend der Formel

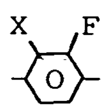

enthält, worin X F oder H bedeutet, eignen sich in hervorragender Weise als organische Substrate in der Elektronik für die Folien- und Fasertechnik, zur Herstellung von wiederholt lösch- und beschreibbaren, laseroptischen Aufzeichnungselementen und als Materialien für die nichtlineare Optik.

EP 0 515 972 A1

Die Erfindung betrifft polymerisierbare Flüssigkristallmaterialien sowie ferroelektrische smektische, flüssigkristalline Phasen aufweisende Polymerzusammensetzungen, die direkt oder über einen Spacer chemisch gebundene mesogene Gruppe aufweisen, in denen mindestens ein querpolarisierendes Strukturelement der Formel

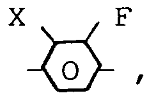 ,

worin X F oder H bedeutet, enthalten ist.

Es ist bereits eine Reihe von flüssigkristallinen Seitenkettenpolymeren bekannt. So werden beispielsweise in der DE-OS 29 44 591 und der EP-PS 0 060 335 Organopolysiloxane und in der DE-OS 28 31 909 sowie bei Springer und Weigelt, Makromol. Chem. 184 (1983) 1489, Polymethacrylate mit mesogenen Seitengruppen beschrieben.

In der EP 0 399 279 werden ferroelektrische Seitenkettenpolymerisate zur Verwendung als Materialien für wiederholt lösch- und beschreibbare laseroptische Aufzeichnungselemente beschrieben.

Diese weisen jedoch keine lateral fluorierten 1,4-Phenylengruppen auf.

Die bislang bekannten Polymerisate mit chiralen mesogenen Seitengruppen, welche ferroelektrisches smektisch flüssigkristallines ($S_C$*) Verhalten zeigen, weisen indes noch immer ein Eigenschaftsprofil auf, das ihre Anwendung in Aufzeichnungsschichten von wiederholt löschbaren und beschreibbaren laseroptischen Aufzeichnungselementen noch immer erschwert. Entweder lassen sich die chiralen mesogenen Seitengruppen der bekannten Polymerisate über die gesamte Aufzeichnungsschicht hinweg nicht einheitlich orientieren, oder sie weisen Phasenübergänge in einem Temperaturbereich auf, welchernicht praxisgerecht ist. Insbesondere weisen sie zu schnelle $S_C$*-Phasenbereiche auf. Häufig kann der beim Erwärmen der Polymerisate sich einstellende flüssigkristalline Ordnungszustand der chiralen mesogenen Seitengruppen bei Raumtemperatur nicht glasartig eingefroren werden, oder aber es wird bei Raumtemperatur ein nicht erwünschter flüssigkristalliner Ordnungszustand eingefroren. Letzteres tritt insbesondere dann ein, wenn die chiralen mesogenen Seitengruppen beim Erwärmen und dem nachfolgenden Abkühlen der Polymerisate flüssigkristalline Phasen durchlaufen, welche hinsichtlich der Reihenfolge ihres Auftretens nicht auf den in Rede stehenden Verwendungszweck abgestimmt sind. So kann es durchaus vorkommen, daß beim Abkühlen der Aufzeichnungsschicht anstelle des erwünschten $S_C$*-Ordnungszustandes ein sonstiger smektisch oder cholesterisch flüssigkristalliner Ordnungszustand oder gar der ungeordnete isotrope Zustand bei Raumtemperatur glasartig eingefroren wird. Bisweilen weisen die bekannten Polymerisate bzw. deren chirale mesogene Seitengruppen eine zu hohe Rotationsviskosität[$\epsilon_{rot}$] und/oder ein zu niedriges Dipolmoment auf, wodurch eine Schaltzeit $\tau$ resultiert, welche für die Praxis zu lang ist. Ferner kommt es des öfteren zu einer thermischen Zersetzung der Polymerisate durch das eingestrahlte Laserlicht, noch bevor sie ihren Klärpunkt, d.h., noch bevor die chiralen mesogenen Seitengruppen ihre isotrope I-Phase erreicht haben.

So lassen sich die betreffenden laseroptischen Aufzeichnungselemente nicht in der raschen und zuverlässigen Weise wiederholt beschreiben, lesen und löschen, wie dies für die Praxis eigentich erforderlich wäre. Außerdem weisen sie ein schlechtes Signal-Rausch-Verhältnis auf und/oder ihre Langzeitstabilität genügt nicht den Anforderungen. Hieraus folgt zwangsläufig, daß die bislang bekannten wiederholt löschbaren und beschreibbaren laseroptischen Aufzeichnungselemente weiterentwickelt werden müssen, damit sie den stetig wachsenden Anforderungen der Praxis gerecht werden. Indes haben bekanntermaßen bereits geringe Veränderungen in der Molekülstruktur der chiralen mesogenen Seitengruppen der bekannten Polymerisate oftmals eine gravierende Veränderung ihres flüssigkristallinen Verhaltens zur Folge, was die gezielte Weiterentwicklung erheblich erschwert.

Aufgabe der vorliegenden Erfindung ist es, ein neues wiederholt löschbares und beschreibbares laseroptisches Aufzeichnungselement zu finden, welches die Nachteile des Standes der Technik nicht mehr länger aufweist.

Beispielsweise sind auch mit 4'-Cyanbiphenyl-4-yl als mesogene Gruppe modifizierte Polyacryl- und Polymethacrylsäureester bekannt. Nematische Phasen solcher Polymerzusammensetzungen liegen meist bei Temperaturen oberhalb 100°. Vielfach zeigen solche Materialien auch kristallines Verhalten, verbunden mit dem Fehlen mesomorpher Eigenschaften.

Weiterhin sind aus der P 36 21 581 achirale flüssigkristalline Seitenkettenpolymere bekannt, die andere querpolarisierende Gruppen enthalten. Der smektische, insbesondere smektische C, Mesophasenbereich ist jedoch im allgemeinen für eine angemessene Verwertbarkeit zu klein.

Aufgabe der vorliegenden Erfindung war es, flüssigkristalline Phasen aufweisende Polymermaterialien zu finden, die die beschriebenen Nachteile nicht oder nur in geringem Maß aufweisen.

Es wurde nun gefunden, daß ferroelektrische Polymermaterialien, die chemisch gebundene mesogene Gruppen mit mindestens einem querpolarisierenden Strukturelement enthalten, überraschend breite Mesophasenbereiche, insbesondere der $S_C$*-Phase,eine in weiten Grenzen variierbare Doppelbrechung und eine vergleichsweise hohe negative dielektrische Anisotropie aufweisen. Sie sind außerdem leicht zu Körpern beliebiger Form mit anisotropen Eigenschaften verarbeitbar und weisen eine hohe chemische Stabilität auf.

Gegenstand der Erfindung sind ferroelektrische, flüssigkristalline Phasen aufweisende Polymerzusammensetzungen, direkt oder über einen Spacer gebundene mesogene Gruppen enthaltend, dadurch gekennzeichnet, daß mindestens eine der mesogenen Gruppen mindestens ein querpolarisierendes Strukturelement entsprechend der Formel

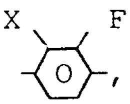,

worin X F oder H bedeutet,
enthält.

Gegenstand der Erfindung sind auch flüssigkristalline Phasen aufweisende Polymerzusammensetzungen definiert nach Anspruch 1, worin die mesogenen Gruppen der Formel I entsprechen,

$R-(A^1-Z^1)_m-A^2-Sp-$ I

worin

| | |
|---|---|
| R | H, Halogen, -CN, -NCS, einen unsubstituierten, einen einfach durch CN oder $CF_3$ oder einen mindestens einfach durch Halogen substituierten Alkyl- oder Alkenylrest mit 1 bis 15 C-Atomen, wobei in diesen Resten auch eine oder mehrere $CH_2$-Gruppen jeweils unabhängig voneinander durch -O-, -S-, 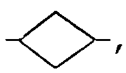, -CO-, -CO-O-, -O-CO- oder -O-CO-O- so ersetzt sein können, daß O-Atome nicht direkt miteinander verknüpft sind, |
| $A^1$ und $A^2$ | jeweils unabhängig voneinander einen (a) trans-1,4-Cyclohexylenrest, worin auch eine oder mehrere nicht benachbarte $CH_2$-Gruppen durch -O- und/oder -S- ersetzt sein können, (b) 1,4-Phenylenrest, worin auch eine oder zwei CH-Gruppen durch N ersetzt sein können, (c) Rest aus der Gruppe 1,4-Cyclohexenylen, 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl, wobei die Reste (a) und (b) durch CN oder Fluor substituiert sein können, |
| $Z^1$ | jeweils unabhängig voneinander -CO-O-, -O-CO-, $-CH_2O-$, $-OCH_2-$, $-CH_2CH_2-$, -CH = CH-, -C≡C- oder eine Einfachbindung, |
| m | 1, 2 oder 3 und |
| Sp | Alkylen mit 2-18 C-Atomen, worin auch eine oder zwei nicht benachbarte $CH_2$-Gruppen durch -O-, -CO-, -O-CO-, -CO-O-, $-C(Halogen)_2-$, $-CR^1R^2-T-$, $-CH = CNO_2-$, $-CHNO_2-$, -CHCN-, -CH = N- oder-CH = CH-ersetzt sein können, oder eine Einfachbindung, |
| T | -COO-, -OCO- oder eine Einfachbindung, |
| $R^1$ | H oder eine Alkylgruppe mit bis zu 6 C-Atomen und |
| $R^2$ | Halogen oder CN |

bedeuten, worin mindestens einer der Reste $A^1$ oder $A^2$ der Formel

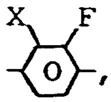

worin X F oder H bedeutet, entspricht.

Vorzugsweise entsprechen die mesogenen Gruppen, enthaltend mindestens ein querpolarisierendes Strukturelement der Formel

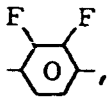

insbesondere der Formel I.

Der Einfachheit halber bedeuten im folgenden Cyc einen 1,4-Cyclohexylenrest, Che einen 1,4-Cyclohexenylenrest, Dio einen 1,3-Dioxan-2,5-diylrest, Dit einen 1,3-Dithian-2,5-diylrest, Phe einen 1,4-Phenylenrest, Pyd einen Pyridin-2,5-diylrest, Pyr einen Pyrimidin-2,5-diylrest, Pip einen Piperidin-1,4-diylrest, Nap einen Naphthalin-2,6-diylrest, Dec und Tet einen Deca- bzw. 1,2,3,4-Tetrahydronaphthalinrest und Bi einen Bicyclo(2,2,2)-octylenrest, wobei Cyc und/oder Phe unsubstituiert oder ein- oder zweifach durch F oder CN substituiert sein können.

Die Strukturen der Formel I umfassen dementsprechend Strukturen mit zwei Ringen der Teilformeln Ia und Ib:

$R\text{-}A^1\text{-}A^2\text{-}Sp\text{-}$ Ia

$R\text{-}A^1\text{-}Z^1\text{-}A^2\text{-}Sp\text{-}$ Ib

Strukturen mit drei Ringen der Teilformeln Ic bis If:

$R\text{-}A^1\text{-}A^1\text{-}A^2\text{-}Sp\text{-}$ Ic

$R\text{-}A^1\text{-}Z^1\text{-}A^1\text{-}Z^1\text{-}A^2\text{-}Sp\text{-}$ Id

$R\text{-}A^1\text{-}Z^1\text{-}A^1\text{-}A^2\text{-}Sp\text{-}$ Ie

$R\text{-}A^1\text{-}A^1\text{-}Z^1\text{-}A^2\text{-}Sp\text{-}$ If

sowie Strukturen mit vier Ringen der Teilformeln Ig bis In:

$R\text{-}A^1\text{-}A^1\text{-}A^1\text{-}A^2\text{-}Sp\text{-}$ Ig

$R\text{-}A^1\text{-}Z^1\text{-}A^1\text{-}A^1\text{-}A^2\text{-}Sp\text{-}$ Ih

$R\text{-}A^1\text{-}A^1\text{-}Z^1\text{-}A^1\text{-}A^2\text{-}Sp\text{-}$ Ii

$R\text{-}A^1\text{-}A^1\text{-}A^1\text{-}Z^1\text{-}A^2\text{-}Sp\text{-}$ Ij

$R\text{-}A^1\text{-}Z^1\text{-}A^1\text{-}Z^1\text{-}A^1\text{-}A^2\text{-}Sp\text{-}$ Ik

$R\text{-}A^1\text{-}Z^1\text{-}A^1\text{-}A^1\text{-}A^1\text{-}Z^1\text{-}A^2\text{-}Sp\text{-}$ Il

$R\text{-}A^1\text{-}A^1\text{-}Z^1\text{-}A^1\text{-}Z^1\text{-}A^2\text{-}Sp\text{-}$ Im

$R\text{-}A^1\text{-}Z^1\text{-}A^1\text{-}Z^1\text{-}A^1\text{-}Z^1\text{-}A^2\text{-}Sp\text{-}$ In

Darunter sind besonders diejenigen der Teilformeln Ia, Ib, Ic, Id, Ie, If, Ii und Il bevorzugt.

In den Teilformeln Ia bis In bedeutet mindestens ein $A^1$ oder $A^2$

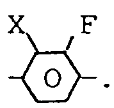

Die bevorzugten Strukturen der Teilformel Ia umfassen diejenigen der Teilformeln Iaa bis Iag:

R-Phe-Phe-Sp- Iaa

R-Phe-Cyc-Sp- Iab

R-Dio-Phe-Sp- Iac

R-Pyr-Phe-Sp- Iad

R-Pyd-Phe-Sp- Iae

R-Cyc-Phe-Sp- Iaf

R-Che-Phe-Sp- Iag

Darunter sind diejenigen der Formeln Iaa, Iab, Iac, Iad und Iaf besonders bevorzugt. Hier und im folgenden bedeutet mindestens ein Rest, ausgewählt aus der Gruppe Phe, $A^1$ und $A^2$,

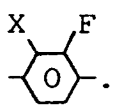

Die bevorzugten Strukturen der Teilformel Ib umfassen diejenigen der Teilformeln Iba bis Ibl:

R-Phe-$CH_2CH_2$-Phe-Sp- Iba

R-Phe-$OCH_2$-Phe-Sp- Ibb

R-Cyc-$CH_2CH_2$-Phe-Sp- Ibc

R-Cyc-COO-Phe-Sp- Ibd

R-$A^1$-$CH_2CH_2$-Phe-Sp- Ibe

R-$A^1$-$CH_2CH_2$-Cyc-Sp- Ibf

R-$A^1$-$CH_2O$-Phe-Sp- Ibg

R-$A^1$-$OCH_2$-Phe-Sp- Ibh

R-$A^1$-COO-Phe-Sp- Ibi

R-$A^1$-OOC-Phe-Sp- Ibj

R-Pha-OOC-Phe-Sp- Ibk

R-Che-$CH_2CH_2$-Phe-Sp- Ibl

Die bevorzugten Strukturender Teilformel Ic umfassen diejenigen der Teilformeln Ica bis Icp:

R-Phe-Phe-Phe-Sp- Ica

R-Phe-Phe-Cyc-Sp- Icb

R-Phe-Dio-Phe-Sp- Icc

R-Cyc-Cyc-Phe-Sp- Icd

R-Phe-Cyc-Phe-Sp- Ice

R-Pyd-Phe-Phe-Sp- Icf

R-Pyr-Phe-Phe-Sp- Icg

R-Phe-Pyr-Phe-Sp- Ich

R-Cyc-Pyr-Phe-Sp- Ici

R-Cyc-Phe-Phe-Sp- Icj

R-Cyc-Phe-Cyc-Sp- Ick

R-Dio-Phe-Phe-Sp- Icl

R-Che-Phe-Phe-Sp- Icm

R-Phe-Che-Phe-Sp- Icn

R-Che-Cyc-Phe-Sp- Ico

R-Cyc-Che-Phe-Sp- Icp

Darunter sind diejenigen der Formeln Ica, Icc, Icd, Ice, Ich und Ici besonders bevorzugt.

Die bevorzugten Strukturen der Teilformel Id umfassen diejenigen der Teilformeln Ida bis Idm:

R-Phe-$Z^1$-Phe-$Z^1$-Phe-Sp- Ida

R-Phe-$Z^1$-Phe-$Z^1$-Cyc-Sp- Idb

R-Phe-$Z^1$-Dio-$Z^1$-Phe-Sp- Idc

R-Cyc-$Z^1$-Cyc-$Z^1$-Phe-Sp- Idd

R-Pyd-$Z^1$-Phe-$Z^1$-Phe-Sp- Ide

R-Phe-$Z^1$-Pyd-$Z^1$-Phe-Sp- Idf

R-Pyr-$Z^1$-Phe-$Z^1$-Phe-Sp- Idg

R-Phe-$Z^1$-Pyr-$Z^1$-Phe-Sp- Idh

R-Phe-$Z^1$-Cyc-$Z^1$-Phe-Sp- Idi

R-Cyc-$Z^1$-Phe-$Z^1$-Cyc-Sp- Idj

R-Cyc-$Z^1$-Phe-$Z^1$-Phe-Sp- Idk

R-Dio-$Z^1$-Phe-$Z^1$-Phe-Sp- Idl

R-Che-$Z^1$-Phe-$Z^1$-Phe-Sp- Idm

Die bevorzugten Strukturen der Teilformel Ie umfassen diejenigen der Teilformeln Iea bis Iel:

R-Pyr-$Z^1$-Phe-Phe-Sp- Iea

R-Dio-$Z^1$-Phe-Phe-Sp- Ieb

R-Phe-$Z^1$-Phe-Phe-Sp- Iec

R-Cyc-$Z^1$-Phe-Phe-Sp- Ied

R-Cyc-$Z^1$-Phe-Cyc-Sp- Iee

R-Phe-$Z^1$-Cyc-Phe-Sp- Ief

R-Cyc-$Z^1$-Cyc-Phe-Sp- Ieg

R-Phe-$Z^1$-Dio-Phe-Sp- Ieh

R-Pyd-$Z^1$-Phe-Phe-Sp- Iei

R-Phe-$Z^1$-Pyr-Phe-Sp- Iej

R-Cyc-$Z^1$-Pyr-Phe-Sp- Iek

R-Phe-$Z^1$-Che-Phe-Sp- Iel

Die bevorzugten Strukturen der Teilformel If umfassen diejenigen der Teilformeln Ifa bis Ifq:

R-Pyr-Phe-$Z^1$-Phe-Sp- Ifa

R-Pyr-Phe-$OCH_2$-Phe-Sp- Ifb

R-Phe-Phe-$Z^1$-Phe-Sp- Ifc

R-Phe-Phe-OOC-Phe-Sp- Ifd

R-Phe-Phe-$Z^1$-Cyc-Sp- Ife

R-Cyc-Cyc-$Z^1$-Phe-Sp- Iff

R-Cyc-Cyc-$CH_2CH_2$-Phe-Sp- Ifg

R-Pyd-Phe-$Z^1$-Phe-Sp- Ifh

R-Dio-Phe-$Z^1$-Phe-Sp- Ifi

R-Phe-Cyc-$Z^1$-Phe-Sp- Ifj

R-Phe-Cyc-$Z^1$-Cyc-Sp- Ifk

R-Phe-Pyd-$Z^1$-Phe-Sp- Ifl

R-Che-Phe-$Z^1$-Phe-Sp- Ifm

R-Phe-Che-$Z^1$-Phe-Sp- Ifn

R-Cyc-Phe-$Z^1$-Phe-Sp- Ifo

R-Cyc-Phe-OOC-Phe-Sp- Ifp

R-Cyc-Phe-$Z^1$-Cyc-Sp- Ifq

Die bevorzugten Strukturen der Teilformeln Ig bis In umfassen diejenigen der Teilformeln Io bis Ix:

R-Cyc-Phe-Cyc-Phe-Sp- Io

R-Cyc-Cyc-Phe-Phe-Sp- Ip

R -Cyc-Phe-Phe-Cyc-Sp- Iq

R-$A^1$-$CH_2O$-$A^1$-$A^1$-Phe-Sp- Ir

R-Cyc-Cyc-$Z^1$-$A^1$-Phe-Sp- Is

R-$A^1$-$A^1$-$A^1$-$CH_2CH_2$-Phe-Sp- It

R-Phe-$Z^1$-Phe-$Z^1$-Dio-Phe-Sp- Iu

R-Phe-$Z^1$-Phe-Phe-$Z^1$-Phe-Sp- Iv

R-$A^1$-COO-$A^1$-COO-$A^1$-Phe-Sp- Iw

R-$A^1$-$A^1$-COO-$A^1$-$Z^1$-Phe-Sp- Ix

Von den Strukturen der vor- und nachstehenden Formeln sind insbesondere diejenigen bevorzugt, in denen nur einer der Reste, ausgewählt aus der Gruppe Phe, $A^1$ und $A^2$,

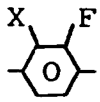

bedeutet.

R bedeutet vorzugsweise Alkyl, ferner Alkoxy. Ferner bedeutet R vorzugsweise einen Perfluoralkylrest, in dem auch Fluor partiell durch Wasserstoff ersetzt sein kann.

Insbesondere bevorzugt sind dabei Reste R mit der allgemeinen Formel $-(CH_2)_o-C_nF_{2n+1}$ und $-C_pF_{2p+1}$ mit n gleich 1 bis 14, o gleich 1 bis 4 und p gleich 1 bis 15. $A^1$ und/oder $A^2$ bedeuten bevorzugt Phe, Cyc, Che, Pyr oder Dio. Besonders bevorzugt bedeutet $A^1$ und $A^2$ Phe oder Cyc. Ferner sind solche Strukturen der Formel I bevorzugt, in denen neben

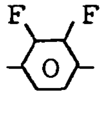

zusätzlich ein weiterer Ring, ausgewählt aus der Gruppe Che, Pip, Pyr, Pyd, Dio, Dit, Bi, Nap, Dec oder Tet enthalten ist.

Bevorzugt sind auch Strukturen der Formel I sowie aller Teilformeln, in denen $A^1$ und/oder $A^2$ einfach durch F oder einfach durch CN substituiertes 1,4-Phenylen bedeutet. Insbesondere sind dies 2-Fluor-1-4-phenylen und 3-Fluor-1,4-phenylen sowie 2-Cyan-1,4-phenylen und 3-Cyan-1,4-phenylen.

Falls ein Rest (a) durch F oder CN substituiert ist, so ist

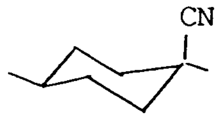

bevorzugt.

$Z^1$ bedeutet bevorzugt eine Einfachbindung, -CO-O-, -O-CO- und $-CH_2CH_2-$, in zweiter Linie bevorzugt $-CH_2O-$ und $-OCH_2-$. Besonders bevorzugt sind Verbindungen, in denen nicht mehr als ein, höchstens zwei Brückenglieder $Z^1$ ($Z^1$ ungleich Einfachbindung) enthalten sind

m bedeutet vorzugsweise 1 oder 2, insbesondere 1.

Die erfindungsgemäßen Zusammensetzungen enthaltend mesogene Gruppen der Formel I mit 2 Ringen (Ia und Ib) sind besonders bevorzugt.

Insbesondere die Strukturen der Teilformeln Ia1 bis Ia13

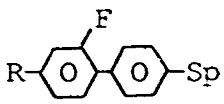

Ia1

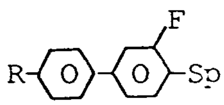

Ia2

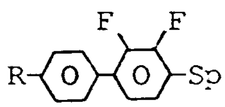

Ia3

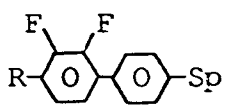

Ia4

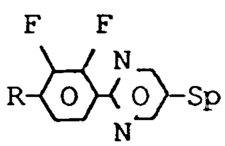

Ia5

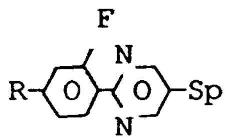

Ia6

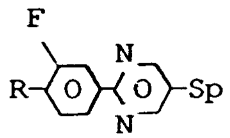

Ia7

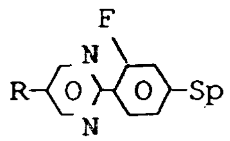

Ia8

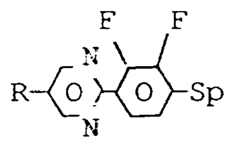

Ia9

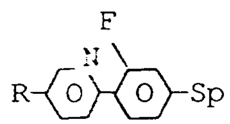

Ia10

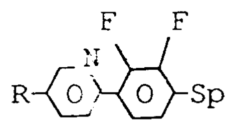

Ia11

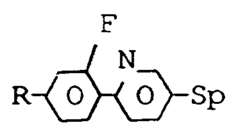

Ia12

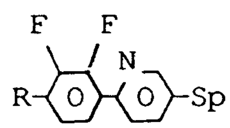

Ia13

sowie die Strukturen der Teilformeln Ib1 bis Ib4

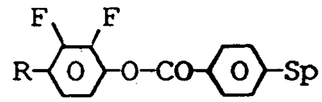 Ib1

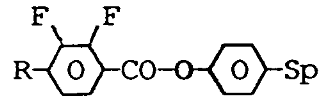 Ib2

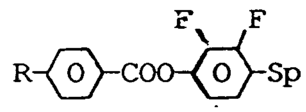 Ib3

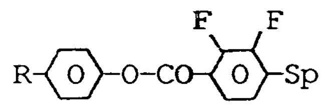 Ib4

Falls R und $R^2$ Halogen bedeuten, so bedeutet R und $R^2$ vorzugsweise F, Cl, Br, ferner auch I.

Falls R einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls R einen Alkylrest bedeutet, in dem eine $CH_2$-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R einen Alkylrest bedeutet, in dem eine $CH_2$-Gruppe durch -O- und eine durch -CO- ersetzt ist, so sind diese bevorzugt benachbart. Somit beeinhalten diese eine Acyloxygruppe -CO-O- oder eine Oxycarbonylgruppe -O-CO-. Vorzugsweise sind diese geradkettig und haben 2 bis 6 C-Atome.

Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 3-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)ethyl, 3-(Methoxycarbonyl)propyl, 3-(Ethoxycarbonyl)propyl, 4-(Methoxycarbonyl)-butyl.

Vorzugsweise enthalten die erfindungsgemäßen Zusammensetzungen eine chirale mesogene Seitengruppe, welche einen optisch aktiven Molekülteil der Formel II aufweist

$Z^2$-$(CH_2)_n$-Q-$Z^3$-$R^2$ II

wobei

| | |
|---|---|
| $Z^1$ und $Z^2$ | jeweils unabhängig voneinander -O-, -CO-O-, -C-CO- oder eine Einfachbindung, |
| Q | -*CXY-, |

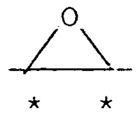 oder 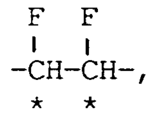

worin

x H oder F, und

Y $CH_3$, CN, $CF_3$, Cl und im Fall X = H auch F bedeuten,

$R^2$ Alkyl, Alkenyl oder Perfluoralkyl mit bis zu 15 C-Atomen worin eine oder mehrere $CH_2$- bzw. $CF_2$-Gruppen durch -O-, -S-, -O-CO- oder -CO-O-ersetzt sein können, wobei zwei Heteroatome durch mindestens eine $CH_2$-Gruppe getrennt sind, und

n 0-10

bedeuten.

Ähnliche Monomere, welche jedoch keinen Rest der Formel

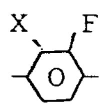

aufweisen, sind bekannt z.B. aus EP 0 399 279 oder EP 0 412 485.

Insbesondere enthalten die erfindungsgemäßen Zusammensetzungen eine chirale mesogene Seitengruppe der Formel I, worin

R eine Gruppe der Formel II insbesondere der Formeln IIa bis IIh

bedeutet.

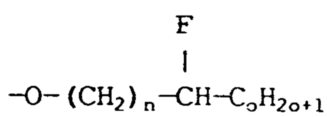 IIa

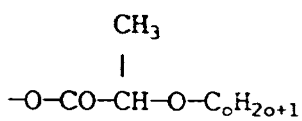 IIb

$$\begin{array}{l} \quad\quad\quad\; Cl \\ \quad\quad\quad\;\; | \\ -O-CO-CH-C_oH_{2o+1} \end{array}$$ IIc

$$\begin{array}{l} \quad\quad\quad\quad\quad\quad\quad CH_3 \\ \quad\quad\quad\quad\quad\quad\quad\;\; | \\ -(CH_2)_n-O-CH-COO-C_oH_{2o+1} \end{array}$$ IId

$$\begin{array}{l} \quad\quad\quad\quad\quad\quad\;\; O \\ \quad\quad\quad\quad\quad\quad / \;\; \backslash \\ -(CH_2)_n-CH-CH-C_oH_{2o+1} \end{array}$$ IIe

$$\begin{array}{l} \quad\quad\quad\quad\quad\; CN \\ \quad\quad\quad\quad\quad\;\; | \\ -(CH_2)_n-CH-C_oH_{2o+1} \end{array}$$ IIf

$$\begin{array}{l} \quad\quad\quad\quad\quad\; CF_3 \\ \quad\quad\quad\quad\quad\;\; | \\ -(CH_2)_n-CH-C_oH_{2o+1} \end{array}$$ IIg

$$\begin{array}{l} \quad\quad\quad\quad\quad\quad\quad\quad\quad\quad CF_3 \\ \quad\quad\quad\quad\quad\quad\quad\quad\quad\quad\;\; | \\ -(CH_2)_n-O-CO-CF-O-C_oF_{2o+1} \end{array}$$ IIh

Chirale Gruppen dieser Art enthalten in der Regel nicht mehr als eine Kettenverzweigung. Bevorzugte verzweigte Reste R sind 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Fluorbutoxy, 2-Fluorpentyloxy, 2-Fluorhexyloxy, 2-Fluorheptyloxy, 2-Fluoroctyloxy, 2-Chlor-3-methylpentanoyloxy.

Sp hat vorzugsweise die Bedeutung einer geradkettigen Alkylengruppe mit 2-10 C-Atomen und bedeutet demnach vorzugsweise Ethylen, Propylen, Butylen, Pentylen, Hexylen, Heptylen, Octylen, Nonylen oder Decylen, ferner auch Undecylen, Dodecylen, Tridecylen, Tetradecylen, Pentadecylen, Hexadecylen, Heptadecylen oder Octadecylen. Ferner können die Alkylengruppen aber auch verzweigt sein und demnach beispielsweise Isopropylen, 1-Methylpropylen, Isobutylen, 2-Methylbutylen, 3-Methylbutylen oder 2-Methylpentylen bedeuten. Weiterhin sind für Sp Alkylengruppen bevorzugt, in denen eine oder zwei nicht benachbarte $CH_2$-Gruppen ersetzt sind, vorzugsweise durch -O-, -OCO-, -CO-O-, -CHHalogen-, -C(Halogen)$_2$-, ferner bevorzugt durch -$CR^1R^2$-T-, -$CHNO_2$- oder -CH=$CNO_2$-. Halogen, $R^1$, $R^2$ und T haben dabei die angegebenen bevorzugten Bedeutungen. Vorzugsweise sind $CH_2$-Gruppen in den Alkylengruppen einfach und terminal durch -O- ersetzt und bedeuten demnach beispielsweise Ethylenoxy, Propylenoxy, Butylenoxy, Pentylenoxy, Hexylenoxy, Heptylenoxy, Octylenoxy, Decylenoxy, Undecylenoxy, Dodecylenoxy, Tetradecylenoxy, Hexadecylenoxy oder Octadecylenoxy.

Unter diesen Strukturen der Formel I sowie den Unterformeln sind diejenigen bevorzugt, in denen mindestens einer der darin enthaltenden Reste eine der angegebenen bevorzugten Bedeutungen hat.

In den Strukturen der Formel I sind diejenigen Stereoisomeren bevorzugt, in denen die Ringe Cyc und

Piperidin trans-1,4-disubstituiert sind. Diejenigen der vorstehend genannten Formeln, die eine oder mehrere Gruppen Pyd, Pyr und/oder Dio enthalten, umschließen jeweils die beiden 2,5-Stellungsisomeren.

Die 1,4-Cyclohexenylen-Gruppe hat vorzugsweise folgende Strukturen:

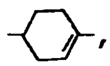 , 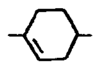

Die den Strukturen der Formel I zugrundeliegenden Verbindungen werden nach an sich bekannten Methoden dargestellt, wie sie in der Literatur (z.B. in den Standardwerken wie Houben-Weyl, Methoden der Organischen Chemie, Georg-Thieme-Verlag, Stuttgart Bd IX, S. 867 ff.) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die 2,3-Difluorphenyleneinheit kann dabei nach verschiedenen Methoden in nahezu beliebiger Position als Teilbaustein Phe, $A^1$ oder $A^2$ eingefügt werden. Ausgangsmaterial kann hierzu 1,2-Difluorbenzol selbst oder ein bereits in der ortho-Position geeignet substituiertes Derivat sein. Sofern keine baselabilen Substituenten vorhanden sind, läßt sich das Difluorbenzol oder ein bereits orthosubstituiertes Derivat in der ortho-Position (ortho zu F) deprotonieren und mit einem entsprechenden Elektrophil umsetzen. Im Falle des unsubstituierten Difluorbenzols läßt sich die Reaktionsfolge in der zweiten ortho-Position wiederholen, so daß schließlich 1,4-disubstituierte 2,3-Difluorbenzolderivate resultieren.

Zur Deprotonierung sind metallorganische Reagenzien und Basensysteme, die solche Reagenzien enthalten, geeignet.

Unter den metallorganischen Reagenzien sind Alkyl- oder Arylmetallverbindungen oder Alkalimetallamide besonders geeignet. Die Basensysteme enthalten zusätzlich noch einen Aktivator, vorzugsweise Komplexbildner wie Amine oder Amide, so z. B. Hexamethylphosphorsäuretriamid (HMPT), Tetramethylethylendiamin (TMEDA) oder N,N-Dimethylpropylenharnstoff (DMPU) oder Metallaustauschreagenzien wie z. B. Kalium-tert.-butanolat (KOT).

Die Reaktion wird in inerten Lösungsmitteln oder Gemischen davon die Ethern und/oder Kohlenwasserstoffen bei tiefen Temperaturen, im allgemeinen unterhalb von -50 °C, unter Schutzgas durchgeführt.

Durch Umsetzung der auf diese Weise entstandenen metallorganischen Verbindungen mit einem Elektrophil sind die verschiedensten Verbindungen zugänglich. Die Reaktionsbedingungen sind für die genannten Umsetzungen bekannt und können den Standardwerken der Präparativen Organischen Chemie entnommen werden, z. B. HOUBEN-WEYL, Methoden der Organischen Chemie, Georg-Thieme-Verlag, Stuttgart oder ORGANIC SYNTHESES, J. Wiley, New York - London-Sydney. Dabei kann man auch von an sich bekannten, hier nicht näher erwähnten Varianten Gebrauch machen. Folgende Reaktionen seien beispielhaft aufgezählt.

Umsetzung mit Elektrophilen wie beispielsweise Brom, Bromcyan, tert. Butylhypobromit oder -chlorit, Iod oder Diiodmethan führt zu den Halogeniden. Cyanverbindungen können hergestellt werden, indem man entsprechende Brom- oder Iodverbindungen mit einem Metallcyanid wie $Cu_2(CN)_2$, z. B. in Gegenwart von Pyridin in einem inerten Lösungs mittel wie Dimethylformamid (DMF) oder N-Methylpyrrolidin-2-on umsetzt.

Phenole können hergestellt werden, indem man die entsprechenden metallorganischen Verbindungen mit Nitrobenzol oxidiert oder mit Sauerstoff (Einleiten von gasförmigen $O_2$ in die Reaktionslösung) oder einem Peroxid umsetzt. Ein bevorzugtes Peroxid ist beispielsweise Lithium-tert.-butylperoxid. Weiterhin liefert die Spaltung von Phenolethern mit Lewissäuren ebenfalls Phenole.

Thiole und Thioether können hergestellt werden, indem man entsprechende metallorganische Verbindungen mit Schwefel bzw. einen Persulfid umsetzt.

Carbonsäuren können hergestellt werden, indem man entsprechende metallorganische Verbinduungen mit Kohlendioxid umsetzt, indem man beispielsweise getrocknetes, gasförmiges $CO_2$ in die Reaktionslösung einleitet oder die Lösung mit Trockeneis versetzt. Ether können hergestellt werden, indem man entsprechende Hydroxyverbindungen verethert. Dabei wird die Hydroxyverbindung zweckmäßig zunächst in ein entsprechendes Metallderivat, z. B. durch Behandeln mit NaH, $NaNH_2$, NaOH, KOH, $Na_2CO_3$ oder $K_2CO_3$ in das entsprechende Alkalimetallalkoholat oder Alkalimetallphenolat überführt. Dieses kann dann mit dem entsprechenden Alkylhalogenid, -sulfonat oder Dialkylsulfonat umgesetzt werden, zweckmäßig in einem inerten Lösungsmittel wie Aceton, 1,2-Dimethoxyethan, DMF oder Dimethylsulfoxid oder auch einem Überschuß an wäßriger oder wäßrig-alkoholischer NaOH oder KOH bei Temperaturen zwischen etwa 20° und 100 °C.

Aldehyde können durch Umsetzung der entsprechenden metallorganischen Verbindungen mit N-Formylamiden, beispielsweise N-Formylpiperidin oder N-Formylmorpholin hergestellt werden. Weitere Synthesemöglichkeiten sind die Reduktion entsprechender Carbonsäuren oder die Oxidation entsprechender primärer Alkohole nach den Standardverfahren der Organischen Chemie.

Aus den Aldehyden sind auch Nitrile durch Umwandlung in das Oxim mit anschließender Dehydratisierung, oder durch Umsetzung der Aldehyde mit Hydroxylamin-O-Sulfonsäure und anschließender thermischer Eliminierung von Schwefelsäure herstellbar.

Ketone können durch Umsetzung der entsprechenden metallorganischen Verbindungen mit Aldehyden und anschließender Oxidation der entstandenen Alkohole hergestellt werden.

Verbindungen mit

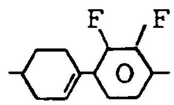

können durch Reaktion der entsprechenden metallorganischen Verbindungen mit 4-substituierten Cyclohexanonen und anschließender Dehydratisierung synthetisiert werden.

Auf der anderen Seite sind Verbindungen herstellbar, indem man 2,3-Difluorbenzolderivate die in 1-Stellung geeignet, d. h. auch eine baseunempfindliche Gruppe, substituiert sind, in der 4-Stellung deprotoniert und gegebenenfalls mit einem Elektrophil weiter umsetzt. Dafür sind wegen möglicher Konkurrenzreaktionen, z. B. Addition an die Carbonylgruppe, nur wenige Substituenten geeignet. Besonders geeignet sind Substituenten wie F, $OR^4$ ($R^4 \neq H$) und Che.

Es können dann auch andere Elektrophile, wie im folgenden beschrieben, eingesetzt werden.

Zur Herstellung von alkylverknüpften Verbindungen können die metallorganischen Verbindungen mit entsprechenden Alkylhalogeniden, vorzugsweise Bromiden oder Iodiden umgesetzt werden. Ein anderer Syntheseweg ist beispielsweise die Umsetzung der metallorganischen Verbindungen mit Aldehyden, nachfolgender Dehydratisierung und abschließender Reduktion der entstandenen Doppelbindung.

Verbindungen, in denen $Z^1$ -CH=CH- oder -C≡C- bedeutet, können auf dem oben beschriebenen Weg synthetisiert werden: Keine Reduktion der Doppelbindung bzw. Oxidation der Doppelbindung zur Dreifachbindung durch Addition von Brom und Eliminierung von zwei Äquivalenten Bromwasserstoff.

Verbindungen, in denen ein aromatisches System direkt mit dem Difluorphenylenrest verknüpft ist, können hergestellt werden, indem die metallorganischen Verbindungen zunächst durch einen Metall-Metall-Austausch in andere, vorzugsweise übergangsmetallorganische Verbindungen überführt werden und anschließend unter katalytischen Bedingungen mit einem Aryl- oder Heteroarylhalogenid umgesetzt werden. Die transmetallierten Verbindungen sind aber auch aus den entsprechenden Halogeniden, beispielsweise Iodiden, durch Metall-Halogen-Austausch zugänglich. Bevorzugte Übergangsmetalle sind Ti, Zn, Cu, Zr, Ni und Pd, insbesondere Ti und Zn. Außer den Übergangsmetallen sind auch Mg, Al und Si bevorzugt. Es können aber auch andere Verbindungen, deren Synthese weiter oben beschrieben ist, zur Erhöhung der Reaktionsselektivität aus den entsprechenden transmetallierten Verbindungen hergestellt werden.

Beispielsweise werden zur Umsetzung mit aromatischen Halogenverbindungen die Lithium-2,3-difluorphenylverbindungen in Zink- (vgl. DE OS 36 32 410) oder Titanverbindungen (vgl. DE OS 37 36 489) überführt.

Aus diesen transmetallierten Verbindungen können dann beispielsweise Ketone durch Umsetzung mit einem Carbonsäurechlorid unter Übergangsmetallkatalyse hergestellt werden.

Eine weitere wichtige Substanzklasse sind die 2,3-Difluorphenylboronsäuren und deren Ester. Sie können in Analogie zu A.M. Roe, Chem. Comm. 22, 582 (1965) dargestellt und zum Beispiel nach dort zitierter Literatur in Phenolderivate überführt werden.

Verbindungen, in denen ein 1,4-Phenylenrest oder ein 1,4-Cyclohexylenrest direkt mit dem Difluorphenylenrest verknüpft ist, können auch hergestellt werden, indem man die entsprechenden metallorganischen Verbindungen zunächst mit Cyclohexanon oder entsprechenden Derivaten davon umsetzt, anschließend dehydratisiert ($Z^1$ = Einfachbindung, $A^1$ = Cyclohexenylen) und abschließend oxidiert bzw. reduziert.

Verbindungen, in denen ein Pyridinring direkt mit dem 2,3-Difluorphenylenrest verknüpft ist, können beispielsweise durch Kopplung von 2-Brompyridinderivaten mit einer 2,3-Difluorphenylmetallverbindung, beispielsweise Titan, unter Übergangsmetallkatalyse hergestellt werden.

Ganz allgemein können Verbindungen, die den Strukturen der Formel I zugrundeliegen, folgendermaßen hergestellt werden.

So können die Verbindungen hergestellt werden, indem man eine Verbindung, die sonst gemäß der Formel I entspricht, aber an Stelle von H-Atomen eine oder mehrere reduzierbare Gruppen und/oder C-C-Bindungen enthält, reduziert.

Als reduzierbare Gruppen kommen vorzugsweise Carbonylgruppen in Betracht, insbesondere Ketogruppen, ferner z.B freie oder veresterte Hydroxygruppen oder aromatisch gebundene Halogenatome. Bevorzugte Ausgangsstoffe für die Reduktion entsprechen Verbindungen gemäß der Formel I, können aber an Stelle eines Cyclohexanringes einen Cyclohexenring oder Cyclohexanonring und/oder an Stelle einer $-CH_2CH_2-$Gruppe eine -CH = CH-Gruppe und/oder an Stelle einer $-CH_2$-Gruppe eine -CO-Gruppe und/oder an Stelle eines H-Atoms eine freie oder eine funktionell (z.B. in Form ihres p-Toluolsulfonats) abgewandelte OH-Gruppe enthalten.

Die Reduktion kann z.B. erfolgen durch katalytische Hydrierung bei Temperaturen zwischen etwa 0° und etwa 200° sowie Drucken zwischen etwa 1 und 200 bar in einem inerten Lösungsmittel, z.B. einem Alkohol wie Methanol, Ethanol oder Isopropanol, einem Ether wie Tetrahydrofuran (THF) oder Dioxan, einem Ester wie Ethylacetat, einer Carbonsäure wie Essigsäure oder einem Kohlenwasserstoff wie Cyclohexan. Als Katalysatoren eignen sich zweckmäßig Edelmetalle wie Pt oder Pd, die in Form von Oxiden (z.B. $PtO_2$, PdO), auf einem Träger (z.B. Pd auf Kohle, Calciumcarbonat oder Strontiumcarbonat) oder in feinverteilter Form eingesetzt werden können.

Ketone können auch nach den Methoden von Clemmensen (mit Zink, amalgamiertem Zink oder Zinn und Salzsäure, zweckmäßig in wäßrig-alkoholischer Lösung oder in heterogener Phase mit Wasser/Toluol bei Temperaturen zwischen etwa 80 und 120°) oder Wolff-Kishner (mit Hydrazin, zweckmäßig in Gegenwart von Alkali wie KOH oder NaOH in einem hochsiedenden Lösungsmittel wie Diethylenglykol oder Triethylenglykol bei Temperaturen zwischen etwa 100 und 200°) zu den entsprechenden Verbindungen, die Alkylgruppen und/oder $-CH_2CH_2$-Brücken enthalten, reduziert werden.

Weiterhin sind Reduktionen mit komplexen Hydriden möglich. Beispielsweise können Arylsulfonyloxygruppen mit $LiAlH_4$ reduktiv entfernt werden, insbesondere p-Toluolsulfonyloxymethylgruppen zu Methylgruppen reduziert werden, zweckmäßig in einem inerten Lösungsmittel wie Diethylether oder THF bei Temperaturen zwischen etwa 0 und 100°. Doppelbindungen können mit $NaBH_4$ oder Tributylzinnhydrid in Methanol hydriert werden.

Verbindungen, die ansonsten Verbindungen gemäß der Formel I entsprechen, aber an Stelle von 1,4-Phenylenresten 1,4-Cyclohexenylenreste besitzen, können zum Beispiel mit DDQ (Dichlordicyanobenzochinon) in einem geeigneten Lösungsmittel oxidiert werden.

Ester können auch durch Veresterung entsprechender Carbonsäuren (oder ihrer reaktionsfähigen Derivate) mit Alkoholen bzw. Phenolen (oder ihren reaktionsfähigen Derivaten) oder nach der DCC-Methode (DCC = Dicyclohexylcarbodiimid) erhalten werden.

Die entsprechenden Carbonsäuren und Alkohole bzw. Phenole sind bekannt oder können in Analogie zu bekannten Verfahren hergestellt werden.

Thiophenole können beispielsweise hergestellt werden, indem man entsprechende Benzolderivate mit Chlorsulfonsäure umsetzt und anschließend beispielsweise mit Zink/verdünnter Salzsäure reduziert, oder indem man entsprechende Phenolderivate mit Dimethylcarbamoylchlorid umsetzt und anschließend umlagert, wie in der DE 34 34 335 beschrieben.

Als reaktionsfähige Derivate der genannten Carbonsäuren eignen sich insbesondere die Säurehalogenide, vor allem die Chloride und Bromide, ferner die Anhydride, z.B. auch gemischte Anhydride, Azide oder Ester, insbesondere Alkylester mit 1-4 C-Atomen in der Alkylgruppe.

Als reaktionsfähige Derivate der genannten Alkohole bzw. Phenole kommen insbesondere die entsprechenden Metall-alkoholate bzw. Phenolate, vorzugsweise eines Alkalimetalls wie Natrium oder Kalium, in Betracht.

Die Veresterung wird vorteilhaft in Gegenwart eines inerten Lösungsmittels durchgeführt. Gut geeignet sind insbesondere Ether wie z. B. Diethylether, Di-n-butylether, THF, Dioxan oder Anisol, Ketone wie z. B. Aceton, Butanon oder Cyclohexanon, Amide wie z. B. DMF oder Phosphorsäurehexamethyltriamid, Kohlenwasserstoffe wie z.B. Benzol, Toluol oder Xylol, Halogenkohlenwasserstoffe wie z.B. Tetrachlorkohlenstoff, Dichlormethan oder Tetrachlorethylen und Sulfoxide wie z. B. Dimethylsulfoxid oder Sulfolan.

In einem weiteren Verfahren zur Herstellung der Verbindungen gemäß der Formel I setzt man ein Arylhalogenid mit einem Olefin um in Gegenwart eines tertiären Amins und eines Palladiumkatalysators (vgl. R.F. Heck, Acc. Chem, Res. 12 (1979) 146). Geeignete Arylhalogenide sind beispielsweise Chloride, Bromide und Iodide, insbesondere Bromide und Iodide. Die für das Gelingen der Kupplungsreaktion erforderlichen tertiären Amine, wie z.B. Triethylamin, eignen sich auch als Lösungsmittel. Als Palladiumkatalysatoren sind beispielsweise dessen Salze, insbesondere Pd(II)-acetat, mit organischen Phosphor-(III)-Verbindungen wie z.B. Triarylphosphanen geeignet. Man kann dabei in Gegenwart oder Abwesenheit eines inerten Lösungsmittels bei Temperaturen zwischen etwa 0° und 150°, vorzugsweise zwischen 20° und 100°, arbeiten; als Lösungsmittel kommen z.B. Nitrile wie Acetonitril oder Kohlenwasserstoffe wie Benzol

oder Toluol in Betracht. Die als Ausgangsstoffe eingesetzten Arylhalogenide und Olefine sind vielfach im Handel erhältlich oder können nach literaturbekannten Verfahren hergestellt werden, beispielsweise durch Halogenierung entsprechender Stammverbindungen bzw. durch Eliminierungsreaktionen an entsprechenden Alkoholen oder Halogeniden.

Auf diese Weise sind beispielsweise Stilbenderivate herstellbar. Die Stilbene können weiterhin hergestellt werden durch Umsetzung eines 4-substituierten Benzaldehyds mit einem entsprechenden Phosphorylid nach Wittig. Man kann aber auch Tolane entsprechend der Formel I herstellen, indem man anstelle des Olefins monosubstituiertes Acetylen einsetzt (Synthesis 627 (1980) oder Tetrahedron Lett. 27, 1171 (1986)).

Weiterhin können zur Kopplung von Aromaten Arylhalogenide mit Arylzinnverbindungen umgesetzt werden. Bevorzugt werden diese Reaktionen unter Zusatz eines Katalysators wie z.B. eines Palladium(0)-komplexes in inerten Lösungsmitteln wie Kohlenwasserstoffen bei hohen Temperaturen, z.B. in siedendem Xylol, unter Schutzgas durchgeführt.

Kopplungen von Alkinyl-Verbindungen mit Arylhalogeniden können analog dem von A.O. King, E. Negishi, F.J. Villani und A. Silveira in J.Org.Chem. 43, 358 (1978) beschriebenen Verfahren durchgeführt werden.

Tolane entsprechend der Formel I können auch über die Fritsch-Buttenberg-Wiechell-Umlagerung (Ann. 279, 319, 332, 1984) hergestellt werden, bei der 1,1-Diaryl-2-halogenethylene umgelagert werden zu Diarylacetylenen in Gegenwart starker Basen.

Tolane entsprechend der Formel I können auch hergestellt werden, indem man die entsprechenden Stilbene bromiert und anschließend einer Dehydrohalogenierung unterwirft. Dabei kann man an sich bekannte, hier nicht näher erwähnte Varianten dieser Umsetzung anwenden.

Zur Herstellung von Nitrilen entsprechend der Formel I können entsprechende Säureamide, z.B. solche, in denen an Stelle des Restes CN eine $CONH_2$-Gruppe steht, dehydratisiert werden. Die Amide sind z.B. aus entsprechenden Estern oder Säurehalogeniden durch Umsetzung mit Ammoniak erhältlich. Als wasserabspaltende Mittel eignen sich beispielsweise anorganische Säurechloride wie $SOCl_2$, $PCl_3$, $PCl_5$, $POCl_3$, $SO_2Cl_2$, $COCl_2$, ferner $P_2O_5$, $P_2S_5$, $AlCl_3$ (z.B. als Doppelverbindung mit NaCl), aromatische Sulfonsäuren und Sulfonsäurehalogenide. Man kann dabei in Gegenwart oder Abwesenheit eines inerten Lösungsmittels bei Temperaturen zwischen etwa 0° und 150° arbeiten; als Lösungsmittel kommen z.B. Basen wie Pyridin oder Triethylamin, aromatische Kohlenwasserstoffe wie Benzol, Toluol oder Xylol oder Amide wie DMF in Betracht.

Zur Herstellung der vorstehend genannten Nitrile kann man auch entsprechende Säurehalogenide, vorzugsweise die Chloride, mit Sulfamid umsetzen, zweckmäßig in einem inerten Lösungsmittel wie z. B. Tetramethylensulfon bei Temperaturen zwischen etwa 80° und 150°, vorzugsweise bei 120°. Nach üblicher Aufarbeitung kann man direkt die Nitrile isolieren.

Ether entsprechend der Formel I sind durch Veretherung entsprechender Hydroxyverbindungen, vorzugsweise entsprechender Phenole, erhältlich, wobei die Hydroxyverbindung zweckmäßig zunächst in ein entsprechendes Metallderivat, z.B. durch Behandeln mit NaH, $NaNH_2$, NaOH, KOH, $Na_2CO_3$ oder $K_2CO_3$ in das entsprechende Alkalimetallalkoholat oder Alkalimetallphenolat übergeführt wird. Dieses kann dann mit dem entsprechenden Alkylhalogenid, -sulfonat oder Dialkylsulfat umgesetzt werden, zweckmäßig in einem inerten Lösungsmittel wie z.B. Aceton, 1,2-Dimethoxyethan, DMF oder Dimethylsulfoxid oder auch mit einem Überschuß an wäßriger oder wäßrig-alkoholischer NaOH oder KOH bei Temperaturen zwischen etwa 20° und 100°.

Zur Herstellung von Nitrilen entsprechend der Formel I können auch entsprechende Chlor-, Brom- oder Jodverbindungen mit einem Cyanid umgesetzt werden, vorzugsweise mit einem Metall cyanid wie z. B. NaCN, KCN oder $Cu_2(CN)_2$, z.B. in Gegenwart von Pyridin in einem inerten Lösungsmittel wie z.B. DMF oder N-Methylpyrrolidon bei Temperaturen zwischen 20° und 200°.

Verbindungen, worin $A^1$ durch mindestens ein F-Atom und/oder eine CN-Gruppe substituiert ist, können auch aus den entsprechenden Diazoniumsalzen durch Austausch der Diazoniumgruppe gegen ein Fluoratom oder gegen eine CN-Gruppe, z.B. nach den Methoden von Schiemann oder Sandmeyer, erhalten werden.

Dioxanderivate bzw. Dithianderivate entsprechend der Formel I werden zweckmäßig durch Reaktion eines entsprechenden Aldehyds (oder eines seiner reaktionsfähigen Derivate) mit einem entsprechenden 1,3-Diol (oder einem seiner reaktionsfähigen Derivate) bzw. einem entsprechenden 1,3-Dithiol hergestellt, vorzugsweise in Gegenwart eines inerten Lösungsmittels wie z.B. Benzol oder Toluol und/oder eines Katalysators, z.B. einer starken Säure wie Schwefelsäure, Benzol- oder p-Toluolsulfonsäure, bei Tepperaturen zwischen etwa 20° und etwa 150°, vorzugsweise zwischen 80° und 120°. Als reaktionsfähige Derivate der Ausgangsstoffe eignen sich in erster Linie Acetale.

Die genannten Aldehyde und 1,3-Diole bzw. 1,3-Dithiole sowie ihre reaktionsfähigen Derivate sind zum

Teil bekannt, zum Teil können sie ohne Schwierigkeiten nach Standardverfahren der Organischen Chemie aus literaturbekannten Verbindungen hergestellt werden. Beispielsweise sind die Aldehyde durch Oxydation entsprechender Alkohole oder durch Reduktion von Nitrilen oder entsprechenden Carbonsäuren oder ihrer Derivate, die Diole durch Reduktion entsprechender Diester und die Dithiole durch Umsetzung entsprechender Dihalogenide mit NaSH erhältlich.

Die Polymermaterialien nach Anspruch 1, werden hergestellt, indem man Verbindungen der Formel III

W-Sp-M III

worin M eine mesogene Gruppe mit dem querpolarisierenden Strukturelement und W eine zur Polymerisation oder Aufpfropfung befähigte funktionelle Gruppe bedeutet, polymerisiert bzw. copolymerisiert oder auf Polymere aufpfropft.

Unter Polymerisation soll hier sowohl radikalische oder ionische Polymerisation als auch Polyaddition oder Polykondensation verstanden werden.

Sofern W eine Alkylengruppe enthält, können die Verbindungen der Formel II radikalisch oder ionisch polymerisiert werden. Ferner können diese Ausgangsverbindungen auch mit weiteren olefinisch ungesättigten Verbindungen copolymerisiert werden. Eine Aufpfropfung ist ebenfalls möglich.

Sofern W eine Hydroxy-, Amino-, Mercapto-, Epoxid- oder Carboxygruppe oder einen ihrer reaktionsfähigen Abkömmlinge bedeutet, können die Verbindungen der Formel II auf ein polymeres Rückgrat aufgepfropft werden.

Die bevorzugten Verbindungen der Formel III entsprechen denen der Formel III'

$R-(A^1-Z^1)_m-A^2-Sp-W$ III

worin die Definition für R, $A^1$, $A^2$, $Z^1$, m und Sp der Formel I entsprechen und

W eine unsubstituierte oder durch F, Cl CN oder $C_{1-16}$-Alkyl substituierte Vinylgruppe, oder eine Carboxy-, Hydroxy-, Amino-, Mercapto- oder Epoxidgruppe

bedeutet.

Für -Sp-W sind folgende Gruppierungen a)-k) ganz besonders bevorzugt:

a) $-(CH_2)_{11}-O-CO-C(CH_3)=CH_2$
b) $-(CH_2)_{11}-OH$
c) $-(CH_2)_9-CH=CH_2$
d) $-O-(CH_2)_6-O-CO-C(CH_3)=CH_2$
e) $-(CH_2)_4-CH=CH_2$
f) $-(CH_2)_6-OH$
g) $-O-(CH_2)_{11}-OH$
h) $-O-(CH_2)_{11}-O-CO-C(CH_3)=CH_2$
i) $-(CH_2)_4-OH$
j) $-(CH_2)_4-O-CO-C(CH_3)=CH_2$
k)

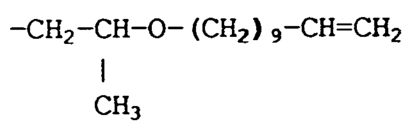

Von den Verbindungen der Formel III' sind insbesondere diejenigen besonders bevorzugt, bei denen die Strukturren $R-(A^1-Z^1)_m-A^2-$ denen der bevorzugten Strukturen gemäß Formel I entsprechen und der noch fehlende Rest -Sp-W einem der Reste a)-k) entspricht.

Die erfindungsgemäßen Polymermaterialien können aus den Verbindungen der Formeln III' auch durch Copolymerisation mit weiteren olefinisch ungesättigten Monomeren insbesondere solche an sich bekannten, welche eine mesogene Seitengruppe aufweisen, hergestellt werden. Als Comonomere eignen sich beispielsweise der Acryl- und/oder der Methacrylsäureester, welche eine mesogene Seitengruppe tragen, Styrol, -Methylsyrol, 4-Methylstyrol, Acrylnitril, Methacrylnitril sowie Methylenmalonester.

Sofern W in Formel III' eine Vinylgruppe bedeutet, erfolgt die Polymerisation in an sich bekannter Weise durch Einwirkung von Strahlungs-, Wärme- oder elektrischer Energie sowie durch Einwirkung

radikalischer oder ionischer Katalysatoren wie z. B. beschrieben in Ocian, Principles of Polymerization, McGraw-Hill, New York oder die Polymerisation erfolgt als Gruppentransferpolymerisation mit Silylketenacetalen als Initiator und Lewis-Basen als Co-Initiator (z.B. beschrieben von O.W. Webster et al., J. Am. Chem. Soc. 1983, 105, 5706-5708).

Als Strahlungsenergie eignen sich UV-, Laser-, Röntgen- und radioaktive Strahlen. Elektrische Energie kann beispielsweise durch Elektrolyseverfahren erzeugt werden. Beispiele für radikalische Katalysatoren sind Kaliumpersulfat, Dibenzoylperoxid, Azo-bisisobutyronitril, Di-tert-butyl-peroxid und Cyclohexanonperoxid. Ionische Katalysatoren sind alkali-organische Verbindungen wie Phenyllithium und Naphthalinnatrium oder Lewissäuren wie $BF_3$, $AlCl_3$, $SnCl_4$ und $TiCl_4$ oder Metallkomplexe in Form von Aluminium-oder Titanverbindungen. Die Monomeren können in Lösung, Suspension, Emulsion oder Substanz polymerisiert werden.

Sofern W eine Hydroxy-, Amino-, Mercapto-, Epoxid- oder Carboxygruppe oder einen ihrer reaktionsfähigen Abkömmlinge bedeutet, können die Verbindungen der Formel III' entweder polymerisiert bzw. polykondensiert werden oder aber auch auf ein polymeres Rückgrat aufgepfropft werden.

Besonders bevorzugt bedeutet hierbei W OH, $NH_2$, COOH oder einen reaktionsfähigen Abkömmling, insbesondere OH oder einen reaktionsfähigen Abkömmling der Carboxylgruppe. Die Aufpfropfungsreaktion kann nach an sich bekannten Methoden, wie z. B. Veresterung, Amidierung, Umesterung, Umamidierung, Acetalisierung oder Veretherung erfolgen, die in der Literatur beschrieben sind [z. B. in Standardwerken wie Houben-Weyl, Methoden der Org. Chemie, Georg-Thieme-Verlag, Stuttgart oder C.M. Paleos et al., J. Polym. Sci. Polym. Chem. 19 (1981), 1427].

Eine bevorzugte Aufpfropfungsreaktion besteht in der Umsetzung von Verbindungen der Formel III' mit Organopolysiloxanen. Hierzu werden, wie z. B. in EP-PS 0 060 335 beschrieben, lineare oder cyclische Organowasserstoffpolysiloxane mit ethylenisch ungesättigten Verbindungen der Formel III' in etwa äquimolaren Mengen, bezogen auf die Menge Siloxan-Wasserstoff, in Gegenwart eines die Addition von Silan-Wasserstoff an aliphatische Mehrfachbindungen fördernden Katalysators umgesetzt.

Als polymeres Rückgrat kommen prinzipiell alle Polymeren in Frage, deren Ketten eine gewisse Flexibilität aufweisen. Es kann sich hierbei um lineare, verzweigte oder cyclische Polymerketten handeln. Der Polymerisationsgrad beträgt normalerweise mindestens 10, vorzugsweise 20-100. Es kommen jedoch auch Oligomere, insbesondere cyclische Oligomere, mit 3 bis 15, insbesondere mit 4 bis 7 Monomereinheiten, in Frage.

Vorzugsweise werden Polymere mit C-C-Hauptketten, insbesondere Polyacrylate, -methacrylate, -$\alpha$-halogenacrylate, -$\alpha$-cyanacrylate, -acrylamide, -acrylnitrile oder -methylenmalonate eingesetzt. Weiterhin bevorzugt sind auch Polymere mit Heteroatomen in der Hauptkette, beispielsweise Polyether, -ester, -amide, -imide oder -urethane oder insbesondere Polysiloxane.

Die erfindungsgemäßen flüssigkristallinen Phasen aufweisende Polymerzusammensetzungen weisen vorzugsweise 20-100 % an mesogenen Gruppen mit dem querpolarisierenden Strukturelement

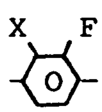

auf. Insbesondere bevorzugt ist ein Gehalt an 50-100 %.

Die Verbindungen der Formel III' können nach an sich bekannten Methoden hergestellt werden, wie sie in der Literatur (z.B. in den Standardwerken wie Houben-Weyl, Methoden der organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

So können Verbindungen der Formel III' mit den reaktionsfähigen Gruppen dadurch erhalten werden, daß man z.B. in Verbindungen, die ansonsten der Formel III' entsprechen, eine Alkylgruppe zur Vinylgruppe dehydriert, oder eine Carboxylgruppe zur Hydroxygruppe reduziert, oder ein Nitril zur Aminogruppe umsetzt. Epoxidgruppen erhält man durch Epoxidierung der entsprechenden Cyclohexanderivate nach Standardverfahren.

Die niedermolekularen Verbindungen der Formel III' weisen teilweise breite Mesophasenbereiche auf. Verbindungen der Formel III', die keine Mesophasen aufweisen, sind jedoch auch zur Herstellung der erfindungsgemäßen Polymermaterialien geeignet.

Die Herstellung von Homo- oder Copolymeren aus den polymerisationsfähigen Verbindungen der Formel III' oder deren polymerisationsfähigen Derivaten erfolgt vorzugsweise durch radikalische Polymerisation. Die Reaktion wird beispielsweise durch UV-Bestrahlung oder Radikalbildner gestartet. Die Monomeren können in Lösung oder in Substanz polymerisiert werden.

Erfindungsgemäße flüssigkristalline Phasen aufweisende Copolymermaterialien werden durch Copolymerisation von polymerisationsfähigen Verbindungen der Formel III' oder deren polymerisationsfähigen Derivaten mit Monomeren erhalten, die keine mesogenen Reste tragen, die andere mesogene Reste tragen, die chirale Reste tragen, insbesondere solche die chirale, mesogene Reste tragen, oder die Farbstoffreste (DE-OS 32 11 400) tragen.

Die Copolymerisation mit solchen Monomeren führt, ausgehend von einer Monomerenmischung mit der Konzentration $X_1$, nur dann zu einem Copolymerisat mit dem einbauverhältnis entsprechend der Monomerkonzentration $X_1$, wenn die Copolymerisationsparameter der Monomerkomponenten von vergleichbarer Größenordnung sind. Das ist besonders dann von Bedeutung, wenn problemlos, z. B. ohne Berücksichtigung der Reaktionskinetik, ein Copolymer bestimmter Zusammensetzung hergestellt werden soll. Deshalb wählt man vorzugsweise Monomerkomponenten, die vergleichbare Copolymerisationsparameter aufweisen, etwa Acrylsäure- oder Methacrylsäurealkylester, die sich in erster Linie durch den Substituenten der Alkylkette unterscheiden.

Die Copolymerisation mit Monomeren, die keinen mesogenen Rest tragen, führt im allgemeinen zu einer Erniedrigung der Glastemperatur und des Klärpunktes. Durch geeignete Answahl des Spacers ist es oftmals möglich, den Mesophasenbereich in den für den jeweiligen Anwendungszweck geeigneten Temperaturbereich zu bringen.

Als Monomere mit chiralem Rest können prinzipiell alle derartigen Verbindungen mit asymmetrischen C-Atomen verwendet werden, vorzugsweise solche, welche einen chiralen mesogenen Rest aufweisen, insbesondere solche mit einem chiralen Rest der Formel II. Das asymmetrische C-Atom kann dabei entweder in der Flügelgruppe, zwischen zwei Ringen oder in der Spacer-Gruppe des mesogenen Restes sitzen, vorzugsweise in der Flügelgruppe.

Bei den erfindungsgemäßen Hauptkettenpolymeren handelt es sich vorzugsweise um Polyester, Polyamide und Polycarbonate, die das wiederkehrende querpolarisierende Strukturelement

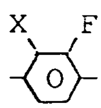

enthalten.

Ganz besonders bevorzugt sind solche Hauptkettenpolymere, die analog der Formel II aufgebaut sind, jedoch an beiden Enden der mesogenen Gruppe M polymerisationsfähige Gruppen W tragen. Eine bevorzugte, zur Polyestersynthese dienende Diolkomponente ist das 2-3-Difluorhydrochinon. Zur Polykondensation befähigte 1,4-Dicarbonsäuren, geeignete Spacer-Gruppen sowie geeignete Reaktionsbedingungen sind beispielsweise in der DE-OS 36 42 999 beschrieben.

Unter den erfindungsgemäßen Hauptkettenpolymeren sind solche mit etwa 6-1000 wiederkehrenden Einheiten bevorzugt.

Allgemein lassen sich die erfindungsgemäßen Hauptkettenpolymere nach gängigen Verfahren, die dem Fachmann geläufig sind, herstellen.

Schließlich ergeben sich zahlreiche weitere Variationsmöglichkeiten wegen des Umstandes, daß die erfindungsgemäßen Verbindungen flüssigkristalline Eigenschaften mit typischen Polymereigenschaften, wie Fähigkeit zur Schicht-, Folien- und Faserbildung, leichte Verformbarkeit usw., vereinigen. Diese Eigenschaften können in an sich bekannter Weise durch Copolymerisation oder Vermischen mit weiteren Komponenten, durch Variation der Molekulargewichte, durch Zusätze der verschiedensten anorganischen oder organischen Additive und Metalle, durch Vernetzen, z.B. zu einem Elastomer, und durch viele weitere, dem Polymerfachmann geläufige Behandlungen modifiziert werden.

Die erfindungsgemäßen Poiymermaterialien lassen sich als Ausgangsmaterial zur Herstellung von organischen Gläsern mit in breiten Bereichen modifizierbaren anisotropen Eigenschaften verwenden.

Derartige Anwendungen ergeben sich beispielsweise auf dem Sektor von Licht- und Sonnenkollektoren oder bei organischen phototropen Gläsern. Ein wichtiges Anwendungsfeld eröffnet sich ferner auf dem Gebiet der optischen Speicher.

Weitere Anwendungsmöglichkeiten erschließen sich auf dem Gebiet der magnetischen Speicher. Insbesondere eignen sich die erfindungsgemäßen Materialien selbst als Materialien mit nichtlinear optischen Eigenschaften oder auf als Matrix für Substanzen mit nicht linear optischen Eigenschaften zur Herstellung von nichtlinear-optischen Bauelementen.

Im folgenden wird das erfindungsgemäße neue wiederholt löschbare und beschreibbare laseroptische Aufzeichnungselement kurz als "erfindungsgemäßes Aufzeichnungselement" bezeichnet.

Der erfindungswesentliche Bestandteil des erfindungsgemäßen Aufzeichnungselements ist seine neue Aufzeichnungsschicht (a) mit enantiotropem, ferroelektrischem smektisch flüssigkristallinem ($S_{C^*}$)-Verhalten. Die neue Aufzeichnungsschicht (a) kann beim Bestrahlen mit einem Laserstrahl ausreichender Lichtleistung durch Anlegen eines äußeren elektrischen Feldes zwischen zwei thermodynamisch stabilen, optisch unterscheidbaren ferroelektrischen smektisch flüssigkristallinen $S_{C^*}$-Ordnungszuständen hin- und hergeschaltet werden.

Hierbei ist es erfindungsgemäß von ganz besonderem Vorteil, wenn nach dem Erwärmen und dem Abkühlen der neuen Aufzeichnungsschicht (a) die beiden lokal vorliegenden, optisch voneinander unterscheidbaren, thermodynamisch stabilen (enantiotropen), ferroelektrischen smektisch flüssigkristallinen $S_{C^*}$-Ordnungszustände bei Raumtemperatur glasartig eingefroren werden können.

Dabei ergibt sich für die neue Aufzeichnungsschicht (a) ein zusätzlicher Vorteil, wenn die in ihr enthaltenen chiralen mesogenen Seitengruppen unterhalb 200 °C in die isotrope I-Phase übergehen, d.h., daß sie einen Klarpunkt unterhalb 200 °C haben.

In der neuen Aufzeichnungsschicht (a) sind die Mikroschichtebenen der $S_{C^*}$-Phase, welche von den in ihr enthaltenen chiralen mesogenen Seitengruppen gebildet wird, senkrecht zur Ebene der neuen Aufzeichnungsschicht (a) orientiert, was allgemein als homeotrope Orientierung bezeichnet wird. Hierbei sind die Moleküllängsachsen der chiralen mesogenen Seitengruppen in Richtung eines Direktors $\eta$ in einem Tiltwinkel $\Theta$ von $+\alpha$ oder $-\alpha$ gegenüber der Normalen Z der Mikroschichtebenen geneigt. Erfindungsgemäß ist es von Vorteil, wenn der Tiltwinkel $\Theta$ bei +0,5° bis +35°, insbesondere +1° bis +25° oder bei -0,5° bis -35°, insbesondere -1° bis -25°, liegt.

Die neue Aufzeichnungsschicht (a) weist vorteilhafterweise eine ferroelektrische Spontanpolarisation $P_S$ bzw. eine Dipoldichte oder eine Summe der ausgerichteten Dipolmomente pro Volumeneinheit der Aufzeichnungsschicht (a) von 1 bis 300 $nC/cm^2$ auf.

Vorteilhafte neue Aufzeichnungsschichten (a) haben eine Dicke d von 0,1 bis 5 µm. Ist die neue Aufzeichnungsschicht (a) mehr als 5 µm dick, so kann es unter Umständen zu einem Verlust der Bistabilität kommen, wogegen es bei einer dicke d von < 0,1 µm einer Deformation der neuen Aufzeichnungsschicht (a), beispielsweise durch Kapillareffekte, kommen kann. Der Dickenbereich von 0,1 bis 5 µm stellt somit ein Optimum dar, innerhalb dessen die Dicke d der neuen Aufzeichnungsschicht (a) breit variiert und den jeweiligen Anforderungen angepaßt werden kann, welche sich aus dem jeweils gewünschten anwendungstechnischen Eigenschaftsprofil einerseits und den physikalisch chemischen Eigenschaften der jeweils verwendeten Polymerisate P andererseits ergeben.

Besonders vorteilhafte neue Aufzeichnungsschichten (a) haben eine Dicke d von 0,1 bis 2,5, insbesondere 0,1 bis 0,8 µm, wobei der Dickenbereich von 0,2 bis 0,5 µm noch einmal besonders hervorzuheben ist, weil die neuen Aufzeichnungsschichten (a) dieses Dickenbereichs hinsichtlich ihres Schreib-, Lese- und Löschverhaltens ganz besondere Vorteile zeigen.

Die neue Aufzeichnungsschicht (a) weist bei Temperaturen oberhalb der Raumtemperatur eine Schaltzeit $\tau$ auf, welche unterhalb einer Millisekunde (ms) liegt. Hierbei ist es von besonderem Vorteil, wenn die Schaltzeit $\tau$ der neuen Aufzeichnungsschicht (a) bei einer Temperatur, welche 1 °C unterhalb des Phasenübergangs $S_{C^*} \rightarrow S_{A^*}$ liegt, kleiner als 100 Mikrosekunden (µs) ist. Neue Aufzeichnungsschichten (a), welches Schaltzeiten $\tau$ in dieser Größenordnung aufweisen, werden für den Aufbau der erfindungsgemäßen Aufzeichnungselemente ganz besonders bevorzugt.

Das erfindungsgemäße Aufzeichnungselement enthält neben der erfindungswesentlichen neuen Aufzeichnungsschicht (a) weitere Schichten, welche für seine Funktion von Nutzen sind.

Vorteilhafte erfindungsgemäße Aufzeichnungselemente umfassen bei

(b) einen ersten dimensionsstabilen Träger, welcher auch optisch transparent sein kann,
(c) eine das Laserlicht reflektierende erste Elektrodenschicht,
(d) eine erste Orientierungsschicht,
(a) die erfindungswesentliche neue Aufzeichnungsschicht,
(e) eine zweite Orientierungsschicht,
(f) eine optisch transparente zweite Elektrodenschicht und
(g) einen optisch transparenten zweiten dimensionsstabilen Träger.

Hinsichtlich dieses Aufbaus ist das erfindungsgemäße Aufzeichnungselement vergleichbar mit den bekannten wiederholt löschbaren und beschreibbaren laseroptischen Aufzeichnungselementen, welche in der EP-A-0 205 187, der GB-A- 21 81 263, der EP-A-0 271 900 oder der US-A-4 752 820 beschrieben sind.

Aus diesen Patentschriften gehen außerdem Beispiele geeigneter erster dimensionsstabiler Träger (b), das Laserlicht reflektierender erster Elektrodenschichten (c), erster Orientierungsschichten (d), zweiter

Orientierungsschichten (e), optisch transparenter zweiter Elektrodenschichten (f) sowie optisch transparenter zweiter dimensionsstabiler Träger (g) hervor.

Methodisch gesehen weist die Herstellung des erfindungsgemäßen Aufzeichnungselements keine Besonderheiten auf, sondern erfolgt nach den vom Stand der Technik her bekannten Methoden, wie sie bespielsweise in der EP-A-0 205 187, der GB-A-2 181 263, der US-A-4 752 820, der EP-A-0 171 045, der DE-A-37 04 146, der DE-A-36 03 268 (EP-A-0 231 857), der DE-A-36 03 267 (EP-A-0 231 858), der EP-A-0 271 900 oder der DE-A-34 29 438 beschrieben werden.

Bei der Herstellung des erfindungsgemäßen Aufzeichnungselements ist bekanntermaßen zu beachten, daß die Orientierungsschichten (d) und (e) so strukturiert werden, daß die chiralen mesogenen Seitengruppen der neuen Polymerisate P in der neuen Aufzeichnungsschicht (a) homeotrop orientiert sind, wobei ihre Moleküllängsachsen gegenüber der Normalen Z in Richtung des Direktors $\eta$ im Tiltwinkel $\Theta$ geneigt sind, wie es einer ferroelektrische smektisch flüssigkristallinen $S_{C^*}$-Phase entspricht.

Hat das erfindungsgemäße Aufzeichnungselement die Form einer runden Scheibe (Disk), so ist es von besonderem Vorteil, wenn die Normale Z eine konzentrische Kreisbahn um den Mittelpunkt der Scheibe beschreibt, was auch als tangentiale Orientierung bezeichnet wird. Die Methoden zur Strukturierung der Orientierungsschichten (d) und (e) sind bekannt und gehen beispielsweise aus den vorstehend genannten Patentschriften oder aus den Publikationen von

- M.J. Bradshaw et al. in Liquid Crystals, Band 2, Seiten 107, 1987;
- A. Mosley et al. in Displays, Seiten 17 bis 21, Januar 1987;
- D. Williams et al. in Journal of Physics, Part D: Applied Physics, Band 19, Seiten L37 bis L41, 1986;
- M.E. Becker et al. in Molecular Crystals and Liquid Crystals, Band 132, Seiten 167 bis 180, 1986;
- J.S. Patel et al. in Ferroelectrics, Band 59, Seiten 137 bis 144, 1984;
- J.S. Patel et al. in Journal of Applied Physics, Band 59, Seiten 2355 bis 2360, 1986;

und von

- J.M. Geary et al. in Journal Physics, Band 62, Seiten 4100 bis 4108, 1987;

hervor.

Das erfindungsgemäße Aufzeichnungselement eignet sich hervorragend für das wiederholte Schreiben, Lesen und Löschen von Daten.

Bekanntermaßen werden hierbei die Daten in die homogen planar orientierte, den Tiltwinkel $\Theta$ von $+\alpha$ oder $-\alpha$ aufweisende, ferroelektrische smektisch flüssigkristalline ($S_{C^*}$) Aufzeichnungsschicht (a) eines laseroptischen Aufzeichnungselements eingeschrieben. Dabei erfolgt das Einschreiben der digitalen oder analogen Daten mit Hilfe eines Schreiblaserstrahls ausreichender Lichtleistung ggf. unter Anlegen eines äußeren elektrischen Feldes. In den Auftreffstellen des Schreiblaserstrahls bilden sich optisch nachweisbare, bei Raumtemperatur stabile enantiotrope Bereiche, die bei Raumtemperatur glasartig eingefrorene ferroelektrische smektisch flüssigkristallinen $S_{C^*}$-Phasen eines Tiltwinkels $\Theta$ von $-\alpha$ oder von $+\alpha$, smektisch flüssigkristalline $S_{A^*}$-Phasen, ungeordente Mikrodomänen (Streuzentren) oder isotrope I-Phasen sind.

Hiernach können die eingeschriebenen Daten oder Bereiche bekanntermaßen mit Hilfe eines Leselaserstrahls über den Doppelbrechungskontrast, den Dichroismuskontrast, die Lichtstreuung an Streuzentren und/oder über die Interferenz reflektierter Laserlichtwellen unterschiedlicher Phasengeschwindigkeit detektiert werden. Dabei erweist es sich von Vorteil, wenn man das von dem betreffenden Aufzeichnungselement reflektierte Licht analysiert und in Signale umwandelt.

Hiernach können bei Bedarf die eingeschriebenen Daten oder Bereiche insgesamt oder selektiv durch vollflächiges oder punktuelles Erwärmen der beschriebenen Aufzeichnungsschicht (a) in einem äußeren elektrischen Feld wieder gelöscht werden.

Danach kann das Schreiben und das Lesen der Daten wiederholt werden.

Dieses Verfahren erweist sich dann als besonders schnell und zuverlässig ausführbar, wenn es mit Hilfe des erfindungsgemäßen Aufzeichnungselements mit der neuen Aufzeichnungsschicht (a) durchgeführt wird. Außerdem erweist sich hierbei das erfindungsgemäße Aufzeichnungselement als besonders lagerstabil, so daß auch nach längerer Lagerung kein Verlust der eingeschriebenen Daten eintritt. Beim Schreiben erweist es sich als besonders empfindlich, so daß zum einen Schreiblaser mit geringer Lichtleistung verwendet werden können, und zum anderen kann die Einschreibgeschwindigkeit im Vergleich zum Stand der Technik deutlich erhöht werden. Beim Lesen liefert das erfindungsgemäße Aufzeichnungselement bei einem ausgesprochen niedrigen Grundrauschen besonders starke scharfe Signale, wodurch ein hohes Signal-Rausch-Verhältsnis resultiert.

Hervorragende Ergebnisse werden erhalten, wenn die Daten in die neue Aufzeichnungsschicht (a) des erfindungsgemäßen Aufzeichnungselements in der Form von optisch nachweisbaren, bei Raumtemperatur stabilen Bereichen eingeschrieben werden, welche ferroelektrische smektisch flüssigkristalline $S_{C^*}$-Phasen des dem ursprünglichen Tiltwinkel $\Theta$ entgegengesetzten Tiltwinkels $\Theta$ von $-\alpha$ oder von $+\alpha$ sind.

Das vorstehend beschriebene Verfahren für das wiederholte Schreiben, Lesen und Löschen von Daten kann mit Hilfe von bekannten Vorrichtungen oder Plattenlaufwerken durchgeführt werden. Vorrichtungen oder Plattenlaufwerke, welche für das in Rede stehende Verfahren geeignet sind, gehen beispielsweise aus der EP-A-0 205 187 hervor.

Hierbei ergeben sich weitere Vorteile, wenn man die in der DE-A-37 04 146 beschriebenen Plattenlaufwerke mit einem drehbaren laseroptischen Schreib- und Lesekopf verwendet.

Zur Erläuterung der Erfindung dienen folgende Beispiele, wobei K = kristalliner Zustand, S = smektische Phase (der Index bezeichnet den Phasentyp), N = nematischer Zustand, Ch = cholesterische Phase, I = isotrope Phase bedeutet. Die zwischen zwei Symbolen stehende Zahl gibt die Umwandlungstemperatur in Grad Celsius an. Fp. bedeutet Schmelzpunkt und Kp. bedeutet Klärpunkt, G = Glaszustand.

**Beispiel 1**

Zu einer Lösung von 8,8 g (28,7 mmol) 4-(6-Methacryloyloxyhexyloxy)-benzoesäure (erhältlich aus 6-Bromhexanol, 4-Hydroxybenzoesäure und aus Methacrylsäure analog der WO 88/00227), 5,0 g (28,7 mmol) 4-Ethoxy-2,3-difluorphenol (erhältlich nach der WO 89/08629) und 350 mg (2,87 mmol) 4-Dimethylaminopyridin in 70 ml Dichlormethan wird bei 0 °C eine Lösung von 6,5 g (31,6 mmol) Dicyclohexylcarbodiimid in 5 ml Dichlormethan gegeben. Nach 2 Stunden Rühren bei Raumtemperatur wurden die festen Bestandteile abfiltriert und das Filtrat mit 1 N Salzsäure und Wasser gewaschen.

Die organische Phase wird über Natriumsulfat getrocknet, eingeengt und an einer Kieselgelsäule mit Dichlormethan als Laufmittel chromatographiert. Man erhält farblose Kristalle vom Fp: 52 °C.

Eine Lösung von 4,0 g (8,65 mmol) 4-Ethoxy-2,3-difluorphenyl-4-(6-methacryloyloxyhexyloxy)-benzoat und 28 mg (0,173 mmol) Azobisisobutyronitril in 40 ml Toluol wird unter Stickstoff 20 h auf 60 °C erhitzt. Das Polymer wird zweimal aus Ethanol umgefällt und man erhält ein farbloses pulvriges Polymer mit G 29 N 69 I.

Analog werden folgende Polymere hergestellt:

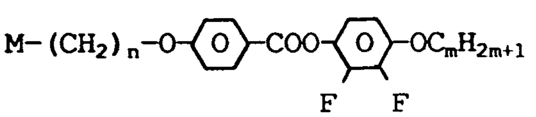

(M = Methacrylat)

| n | m | n | m | n | m | n | m |
|---|---|---|---|---|---|---|---|
| 6 | 1 | 3 | 1 | 4 | 1 | 11 | 1 |
| 6 | 3 | 3 | 2 | 4 | 2 | 11 | 2 |
| 6 | 4 | 3 | 3 | 4 | 3 | 11 | 3 |
| 6 | 5 | 3 | 4 | 4 | 4 | 11 | 4 |
| 6 | 6 | 3 | 5 | 4 | 5 | 11 | 5 |
| 6 | 7 | 3 | 6 | 4 | 6 | 11 | 6 |
| 6 | 8 | 3 | 7 | 4 | 7 | 11 | 7 |
| 6 | 9 | 3 | 8 | 4 | 8 | 11 | 8 |
| 6 | 10 | 3 | 9 | 4 | 9 | 11 | 9 |
| 6 | 12 | 3 | 10 | 4 | 10 | 11 | 10 |
| | | 3 | 12 | 4 | 12 | 11 | 12 |

Mit 4-Hydroxy-2,3-difluor-4'-alkyloxybiphenylen (erhältlich nach WO 89/08629) werden hergestellt:

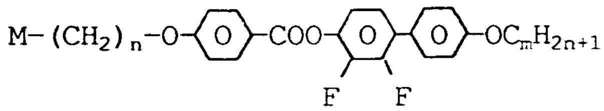

| n | m | n | m | n | m | n | m |
|---|---|---|---|---|---|---|---|
| 3 | 1 | 4 | 1 | 6 | 1 | 11 | 1 |
| 3 | 2 | 4 | 2 | 6 | 2 | 11 | 2 |
| 3 | 3 | 4 | 3 | 6 | 3 | 11 | 3 |
| 3 | 4 | 4 | 4 | 6 | 4 | 11 | 4 |

| n | m | n | m | n | m | n | m |
|---|---|---|---|---|---|---|---|
| 3 | 5 | 4 | 5 | 6 | 5 | 11 | 5 |
| 3 | 6 | 4 | 6 | 6 | 6 | 11 | 6 |
| 3 | 7 | 4 | 7 | 6 | 7 | 11 | 7 |
| 3 | 8 | 4 | 8 | 6 | 8 | 11 | 8 |
| 3 | 9 | 4 | 9 | 6 | 9 | 11 | 9 |
| 3 | 10 | 4 | 10 | 6 | 10 | 11 | 10 |

Analog werden mit gleichen Wertepaaren n/m hergestellt:

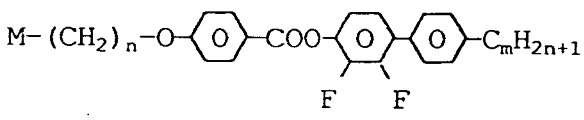,

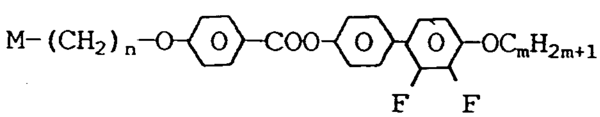 und

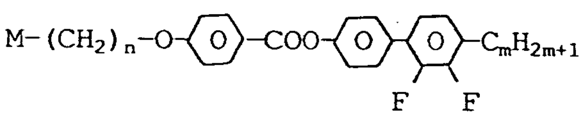

## Beispiel 2

Mit n-Bromalkanolen, Methacrylsäure und 2-(4-Hydroxy-2,3-difluorphenyl)-5-alkyl- bzw.-alkoxypyrimidinen (erhältlich nach WO 89/08649) erhält man analog WO 88/00227:

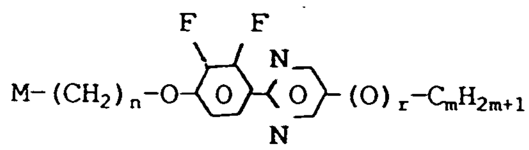

| n | r | m |
|---|---|---|
| 6 | 0 | 5 |
| 6 | 0 | 6 |
| 6 | 0 | 7 |
| 6 | 0 | 8 |
| 6 | 0 | 10 |
| 6 | 0 | 11 |
| 6 | 1 | 5 |
| 6 | 1 | 6 |
| 6 | 1 | 7 |
| 6 | 1 | 8 |
| 6 | 1 | 10 |
| 6 | 1 | 11 |

## Beispiel 3

Mit 2-(4-Hydroxy-2-fluorphenyl)-5-alky]-bzw.-alkoxypyrmidinen (erhältlich nach WO 89/08649) erhält man analog Beispiel 2:

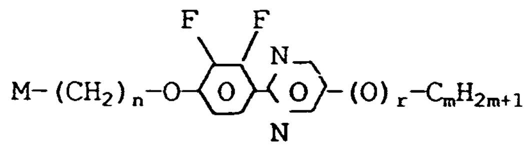

| n | r | m |
|---|---|---|
| 6 | 0 | 5 |
| 6 | 0 | 6 |
| 6 | 0 | 7 |

| n | r | m |
|---|---|---|
| 6 | 0 | 8 |
| 6 | 0 | 10 |
| 6 | 1 | 5 |
| 6 | 1 | 6 |
| 6 | 1 | 7 |
| 6 | 1 | 8 |
| 6 | 1 | 10 |
| 6 | 1 | 11 |

## Beispiel 4

Mit 2-(4-Alkoxy- bzw.-Alkyl-2-fluorphenyl)-5-hydroxypyrimidinen (erhältlich nach WO 90/15116) erhält man analog Beispiel 2:

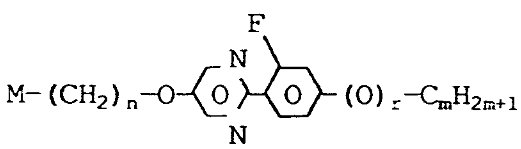

| n | r | m |
|---|---|---|
| 6 | 0 | 5 |
| 6 | 0 | 6 |
| 6 | 0 | 7 |
| 6 | 0 | 8 |
| 6 | 0 | 10 |
| 6 | 0 | 11 |
| 6 | 1 | 5 |

| n | r | m |
|---|---|---|
| 6 | 1 | 6 |
| 6 | 1 | 7 |
| 6 | 1 | 8 |
| 6 | 1 | 10 |
| 6 | 1 | 11 |

Die Präpolymere der Beispiele 1 bis 4 lassen sich mit den Präpolymeren der Beispiele 5-7 copolymerisieren. Man erhält so Copolymere mit breitem $S_{C^*}$-Phasenbereich.

**Beispiel 5**

Mit 2-(4-(2-Fluoroctyloxy-2-fluorphenyl)-5-hydroxypyrimidin (erhältlich nach WO 90/15116) erhält man analog Beispiel 2:

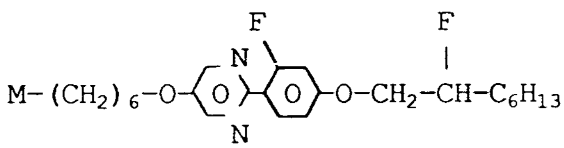

Analog wird hergestellt

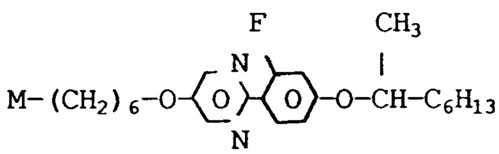

**Beispiel 6**

Mit 4-(2-Methylbutoxy)-2,3-difluorphenol (erhältich nach WO 89/08639) erhält man analog Beispiel 1:

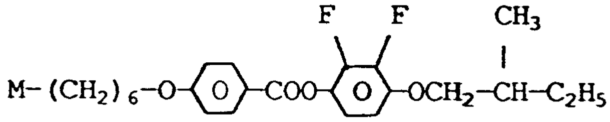

**Beispiel 7**

Mit 4-(1-Methylheptyloxy)-2,3-difluorphenol (erhältich nach WO 89/08639) erhält man analog Beispiel 1:

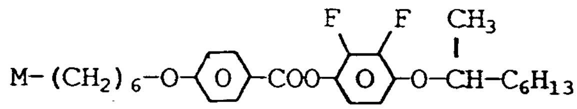 S* 10 I

Analog werden hergestellt:

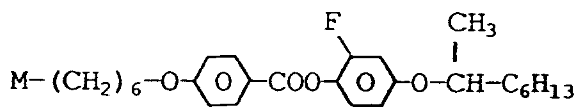

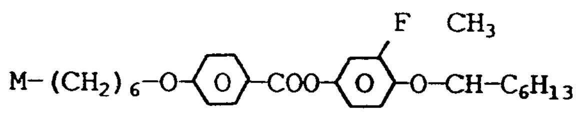

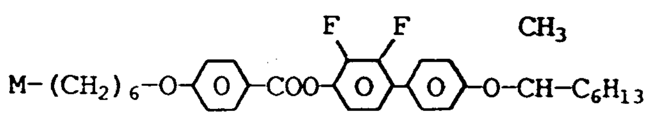

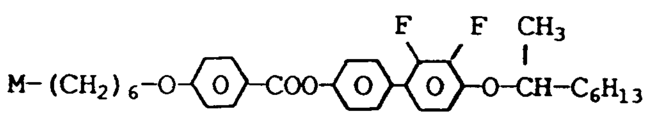

Wie die voranstehenden Beispiele zeigen, lassen sich die neuen Homo- und Copolymerisate mit chiralen mesogenen Seitengruppen ebenso einfach herstellen wie die vom Stand der Technik her bekannten. Zu ihrer Herstellung sind daher keine zusätzlichen technischen Maßnahmen zu treffen. Dies schafft eine zusätzlichen Anreiz, die bekannten Homopolymerisate durch die neuen Homo- und Copolymerisate zu ersetzen, um sich so deren besondere anwendungstechnische Vorteile nutzbar zu machen.

So tritt beispielsweise bei den bekannten Homopolymerisaten keine oder nur eine monotrope $S_{C^*}$-Phase auf, welche lediglich beim Abkühlen der bekannten Homopolymerisate erhältlich ist.

Häufig fehlt auch bei den bekannten Homopolymerisaten die N*-Phase, welche aus anwendungstechnischer Sicht von Bedeutung ist, weil sie die Orientierung der chiralen mesogenen Seitengruppen vereinfacht.

Außerdem haben die bekannten Homopolymerisate nicht das Phasenübergangsverhalten, wie es z.B. für ihre Verwendung in den Aufzeichnungsschichten (a) von laseroptischen Aufzeichnungselementen wünschenswert oder notwendig ist.

Überdies hinaus ist die für die laseroptische Datenaufzeichnung notwendige Schaltzeit $\tau$ (response time) bei den bekannten Homopolymerisaten zu lang.

## Anwendungsbeispiel

Die Herstellung erfindungsgemäßer Aufzeichnungselemente und deren Verwendung für das wiederholte Schreiben, Lesen und Löschen digitaler Daten

### Allgemeine Versuchsvorschrift:

Auf eine Planglasscheibe (BK7) der Abmessungen 40x30x3 mm werden zunächst eine 0,7 µm dicke, leitfähige, transparente Elektrodenschicht aus Indium-Zinn-Oxid (ITO, R = 30 Ω/□) und hierauf wiederum eine 0,25 µm dicke $SiO_2$-Schicht in üblicher und bekannter Weise durch Sputtern aufgebracht.

Die $SiO_2$-Schicht und die ITO-Schicht werden mit Hilfe der Photoresisttechnik bildmäßig abgeätzt, so daß eine Reliefstruktur mit quadratischer ITO-Elektrode und mit der entsprechenden Stromzufuhr resultierte.

Hierbei wird als Photoresist der Negativresist Nylotron® WV 0138 X der Firma BASF AG verwendet. Das Wegätzen erfolgt mit Hilfe einer Ätzlösung aus 268 g $FeCl_2 \cdot 4H_2O$, 24 g $SnCl_2 \cdot 2H_2O$, 450 ml 37%iger HCl und 415 ml Wasser. Zum Strippen des verbliebenen Photoresists wird 3%ige wäßrige Kalilauge verwendet.

Im Anschluß daran wird auf die Oberfläche der resultierenden Anordnung eine Orientierungsschicht aus angeriebenem Polyimid durch Aufschleudern einer 3%igen Lösung eines Polyimidvorläufers (Liquicoat® ZLI 2650 der Firma Merck OHG), Trocknen der resultierenden Naßschicht, 4stündigem Backen der Polyimidvorläufer-Schicht bei 300 °C und Anreiben der so erhaltenen Polyimidschicht mit einem Velourstuch aufgebracht.

Zur Herstellung des erfindungsgemäßen Aufzeichnungselements werden im Bereich der quadratischen ITO-Elektrode auf die Oberfläche der Orientierungsschicht 5 bis 10 mg eines neuen Homopolymerisats oder eines neuen Copolymerisats mit chiralen mesogenen Seitengruppen aufgetragen. Hiernach wird die Anordnung aus Planglasscheibe, ITO-Elektrodenrelief und Orientierungsschicht auf 10 °C oberhalb der Klärtemperatur des betreffenden neuen (Co)Polymerisats aufgeheizt.

Hiernach wird der Bereich um das ITO-Elektrodenrelief mit einer hochtemperaturbeständigen Polyimidspacerfolie abgedeckt und die gesamte hierbei resultierende Anordnung aus Planglasscheibe, ITO-Elektrodenrelief, Orientierungsschicht, geschmolzenem neuen (Co)Polymerisat P und Spacerfo lie mit einer zweiten 10 °C über den Klärpunkt des betreffenden neuen (Co)Polymerisats erhitzten, deckungsgleichen Anordnung aus Planglasscheibe, ITO-Elektrodenrelief und Orientierungsschicht bedeckt, so daß ein paralleler Plattenkondensator resultiert, in welchem das geschmolzene neue (Co)Polymerisat eingeschlossen ist.

Diese Sandwich-Anordnung wird während bis 2 Stunden in einer mechanischen Folienpresse bei einer Temperatur von 10 °C oberhalb der Klärtemperatur des betreffenden neuen (Co)Poly merisats verpreßt, wodurch das erfindungsgemäße Aufzeichnungselement je nach Dicke der Spacerfolie mit einer 0,1, 2, 6, 10 oder 50 µm dicken neuen Aufzeichnungsfolie (a) resultiert.

Die Schaltzeiten $\tau$ (response time) des erfindungsgemäßen Aufzeichnungselements werden anhand der zeitlichen Änderung seiner polarisationsoptischen Eigenschaften beim Wechsel der angelegten Gleichspannung von +U(V) nach -U(V) bestimmt.

Hierzu wird die zeitliche Änderung der Transmission eines HeNe-Laserstrahls ($\lambda$ = 633 nm) gemessen, wenn sich die neue Aufzeichnungsscnicht (a) zwischen zwei gekreuzten Polarisatoren befindet, wobei die Achse des Tiltwinkels $\Theta$ des betreffenden neuen (Co)Polymerisats P vor dem Schaltvorgang [angelegte Spannung: +U(V)] unter einem Winkel von 45° zu den Polarisatoren stand, was die maximale Transmission der neuen Aufzeichnungsschicht (a) gewährleistet.

Die Schaltzeit $\tau$ wird dann als diejenige Zeit ermittelt, in welcher sich die Transmission des durch die neue Aufzeichnungsschicht (a) hindurchgestrahlten Laserstrahls nach dem Umschaltvorgang von +U(V) nach -U(V) von 90 % des Transmissionskontrasts auf 10 % dieses Kontrasts ändert.

Der Tiltwinkel $\Theta$ des betreffenden neuen (Co)Polymerisats in der neuen Aufzeichnungsschicht (a) wird in üblicher und bekannter Weise bei einer Temperatur $T_C$-5K durch Messung des Schaltwinkels $2\Theta$ polarisationsmikroskopisch gemessen. Hierbei bei bedeutet $T_C$ die Phasenübergangstemperatur der $S_{C^*}$-Phase in die folgende Hochtemperaturphase.

Die Ganghöhe G (pitch) wird, wie von S. Rozanski in Physicus Status Solidi (a), Band 79 (1983), Seite 309 angegeben, gemessen. Hierzu werden stets 50 µm dicke neue Aufzeichnungsschichten (a) verwendet, und die Messungen werden im Temperaturbereich der betreffenden $S_{C^*}$-Phase durchgeführt.

Für die Bestimmung der ferroelektrischen Spontanpolarisation $P_S$ bzw. der Dipoldichte oder der Summe der ausgerichteten Dipolmomente pro Volumeneinheit der Aufzeichnungsschicht (a) wird die übliche und bekannte Dreiecks-Methode angewandt. Hierzu wird an die ITO-Elektroden des erfindungsgemäßen Aufzeichnungselements eine periodische Dreiecksspannung einer Frequenz von 20 Hz mit einer Spannungsspitze (Peak-Spannung) von ± 20, ± 60, ± 62 und ± 70 V angelegt und gleichzeitig der durch das erfindungsgemäße Aufzeichnungselement fließende Strom zeitabhängig registriert. Aus den gemessenen Werten für den Gesamtstrom I (t), dem kapazitiven Strom und dem Ohmschen Strom wird dann der Spontanpolarisationsstrom ermittelt und hieraus die ferroelektrische Spontanpolarisation $P_S$ ($nC/cm^2$) errechnet.

## Beispiel A

Für das Beispiel A wird das aus dem neuen Monomeren hergestellte neue Polymerisat des Beispiel 7 verwendet.

Die neue Aufzeichnungsschicht (a) kann daher im Temperaturbereich ihrer $S_{C^*}$-Phase problemlos ganzflächig oder punktuell durch Anlegen von Gleichspannung zwischen zwei thermodynamisch stabilen

$S_{C^*}$-Ordnungszuständen hin- und hergeschaltet werden. Das erfindungsgemäße Aufzeichnungselement war daher hervorragend für das wiederholte Schreiben, Lesen und Löschen von Daten mit Hilfe von Laserstrahlen geeignet.

## Patentansprüche

1. Ferroelektrische smektische, flüssigkristalline Phasen aufweisende Polymerzusammensetzungen, direkt oder über einen Spacer chemisch gebundene mesogene Gruppen enthaltend, dadurch gekennzeichnet, daß mindestens eine der mesogenen Gruppen mindestens ein querpolarisierendes Strukturelement entsprechend der Formel

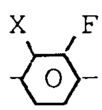

enthält,

worin X F oder H bedeutet.

2. Zusammensetzungen nach Anspruch 1 auf Basis von Seitenkettenpolymeren, dadurch gekennzeichnet, daß sie mesogene Gruppen der Formel I enthalten,

$R\text{-}(A^1\text{-}Z^1)_m\text{-}A^2\text{-}Sp\text{-}$  I

worin

R: H, Halogen, -CN, -NCS, einen unsubstituierten, einen einfach durch CN oder $CF_3$ oder einen mindestens einfach durch Halogen substituierten Alkyl- oder Alkenylrest mit 1 bis 15 C-Atomen, wobei in diesen Resten auch eine oder mehrere $CH_2$-Gruppen jeweils unabhängig voneinander durch -O-, -S-,

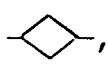,

-CO-, -CO-O-, -O-CO-,

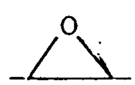

oder -O-CO-O- so ersetzt sein können, daß O-Atome nicht direkt miteinander verknüpft sind,

$A^1$ und $A^2$: jeweils unabhängig voneinander einen
(a) trans-1,4-Cyclohexylenrest, worin auch eine oder mehrere nicht benachbarte $CH_2$-Gruppen durch -O- und/oder -S- ersetzt sein können,
(b) 1,4-Phenylenrest, worin auch eine oder zwei CH-Gruppen durch N ersetzt sein können,
(c) Rest aus der Gruppe 1,4-Cyclohexenylen, 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl,
wobei die Reste (a) und (b) durch CN oder Fluor substituiert sein können,

$Z^1$: jeweils unabhängig voneinander -CO-O-, -O-CO-, $-CH_2O-$, $-OCH_2-$, $-CH_2CH_2-$, -CH=CH-, -C≡C-oder eine Einfachbindung,

m: 1, 2 oder 3 und

Sp: Alkylen mit 2-18 C-Atomen, worin auch eine oder zwei nicht benachbarte $CH_2$-

Gruppen durch -O-, -CO-, -O-CO-, -CO-O-, -C(Halogen)$_2$-, -CR$^1$R$^2$T-, -CH = CNO$_2$-, -CHNO$_2$-, -CHCN-, -CH = N- oder CH = CH- ersetzt sein können, oder eine Einfachbindung,

T -COO-, -OCO- oder eine Einfachbindung,

R$^1$ H oder eine Alkylgruppe mit bis zu 6 C-Atomen und

R$^2$ Halogen oder CN

bedeuten, worin mindestens einer der Reste A$^1$ oder A$^2$ der Formel

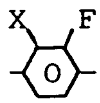

entspricht.

**3.** Zusammensetzung nach Anspruch 1 oder 2, welcher ferroelektrisches Verhalten zeigt, dadurch gekennzeichnet, daß sie mindestens eine chirale mesogene Seitengruppe enthält, welche einen optisch aktiven Molekülteil der Formel II aufweist

$-Z^2-(CH^2)_n-Q-Z^3-R^2$ II

wobei

$Z^2$ und $Z^3$ jeweils unabhängig voneinander O, -CO-O-, -O-CO- oder eine Einfachbindung,

Q -$^*$CXY-,

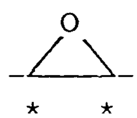 oder 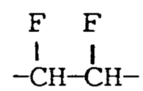

worin

X H oder F, und

Y $CH_3$, CN, $CF_3$, Cl und im Fall X = H auch F

bedeuten,

R$^2$ Alkyl oder Alkenyl mit bis zu 15 C-Atomen, worin eine oder mehrere $CH_2$-Gruppen durch -O-, -S-, -O-CO- oder -CO-O ersetzt sein können, wobei zwei Heteroatome durch mindestens eine $CH_2$-Gruppe getrennt sind, und

n 0-10

bedeuten.

**4.** Zusammensetzung nach Anspruch 4, dadurch gekennzeichnet, daß die chirale mesogene Seitengruppe einen optisch aktiven Molekülanteil der Formel II und ein querpolarisierendes Strukturelement der Formel

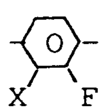

aufweist.

**5.** Verwendung von Polymerzusammensetzungen nach Anspruch 1 oder 2 als organische Substrate in der Elektronik für die Faser- und Folientechnik.

**6.** Verwendung von Polymerzusammensetzungen nach Anspruch 1 oder 2 als Materialien für die nichtlineare Optik.

**7.** Wiederholt löschbares und beschreibbares Aufzeichnungselement, enthaltend a) eine Aufzeichnungsschicht mit enantiotropem, ferroelektrischem smektisch flüssigkristallinem ($S_{C^*}$) Verhalten, die beim Bestrahlen mit einem Laserstrahl ausreichender Lichtleistung durch Anlegen eines äußeren elektrischen Feldes zwischen zwei thermodynamisch stabilen, optisch unterscheidbaren ferroelektrischen smektisch flüssigkristallinen $S_{C^*}$-Ordnungszuständen hin- und hergeschaltet werden kann,

dadurch gekennzeichnet, daß die Aufzeichnungsschicht (a) mindestens eine Zusammensetzung gemäß einem der Ansprüche 1 bis 4 enthält oder aus mindestens einem dieser Polymerisate besteht.

**8.** Wiederholt löschbares und beschreibbares laseroptisches Aufzeichnungselement nach Anspruch7, dadurch gekennzeichnet, daß die Dicke d der Aufzeichnungsschicht (a) bei 0,1 bis 5 $\mu$m liegt.

**9.** Wiederholt löschbares und beschreibbares laseroptisches Aufzeichnungselement nach Anspruch 11 oder 8, dadurch gekennzeichnet, daß die Schaltzeit $\tau$, welche für das Umschalten der Aufzeichnungsschicht (a) von einem thermodynamisch stabilen, ferroelektrischen smektisch flüssigkristallinen $S_{C^*}$-Ordnungszustand zum anderen notwendig ist, bei Temperaturen oberhalb der Raumtemperatur unterhalb 1 ms liegt.

**10.** Wiederholt löschbares und beschreibbares laseroptisches Aufzeichnungselement nach Anspruch 9, dadurch gekennzeichnet, daß die Schaltzeit $\tau$ bei einer Temperatur, welche 1 °C unterhalb des Phasenübergangs $S_{C^*} \rightarrow S_{A^*}$ liegt, kleiner als 100 $\mu$s ist.

**11.** Verfahren für das wiederholte Schreiben, Lesen und Löschen von Daten, bei welchem man in die ferroelektrische smektische flüssigkristalline ($S_{C^*}$) Aufzeichnungsschicht (a) eines laseroptischen Aufzeichnungselements

(1) die digitalen oder die analogen Daten mit Hilfe eines Schreiblaserstrahls ausreichender Lichtleistung ggf. unter Anlegen eines äußeren elektrischen Feldes in der Form von optisch nachweisbaren, bei Raumtemperatur stabilen Bereichen einschreibt, die ferroelektrische smektisch flüssigkristalline $S_{C^*}$-Phasen, smektisch flüssigkristalline $S_{A^*}$-Phasen, ungeordnete Mikrodomänen (Streuzentren) oder isotrope I-Phasen sind,

(2) die eingeschriebenen Daten oder Bereiche mit Hilfe eines Leselaserstrahls über den Doppelbrechungskontrast, den Dichroismuskontrast, die Lichtstreuung an Streuzentren und/oder über die Interferenz reflektierter Laserlichtwellen unterschiedlicher Phasengeschwindigkeit detektiert, wobei man das von dem Aufzeichnungselement reflektierte Licht analysiert, wonach man

(3) die eingeschriebenen Daten oder Bereiche insgesamt oder sektorweise durch vollflächiges oder sektorweises Erwärmen der beschriebenen Aufzeichnungsschicht (a) in einem äußeren elektrischen Feld wieder löschen und

(4) die Verfahrensschritte (1) und (2) wiederholen kann,

dadurch gekennzeichnet, daß man hierbei ein laseroptisches Aufzeichnungselement gemäß einem der Ansprüche 7-10 verwendet.

**12.** Das Verfahren nach Anspruch 11, dadurch gekennzeichnet, daß man hierbei das laseroptische Aufzeichnungsmaterial gemäß einem der Ansprüche 7 bis 10 in der Form einer runden Scheibe (Disk) und ein Plattenlaufwerk mit einem drehbaren laseroptischen Schreib- und Lesekopf verwendet.

Europäisches Patentamt

# EUROPÄISCHER RECHERCHENBERICHT

Nummer der Anmeldung

EP 92 10 8515

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-9 000 584 (HOECHST AG)<br>* Seite 1, Zeile 1 - Zeile 3 *<br>* Seite 1, Zeile 22 - Zeile 32 *<br>* Seite 2, Zeile 29 - Seite 5, Zeile 19 *<br>* Ansprüche 1-3,7,8 *<br>--- | 1-5 | C09K19/38<br>G11B7/24 |
| X | EP-A-0 355 772 (IDEMITSU KOSAN)<br>* Seite 2, Zeile 7 - Zeile 16 *<br>* Seite 2, Zeile 51 - Seite 3, Zeile 1 *<br>* Seite 3, Zeile 51 - Seite 6, Zeile 32 *<br>* Seite 7, Zeile 15; Beispiele 5,17 *<br>--- | 1-4 | |
| X | WORLD PATENTS INDEX LATEST<br>Week 9013,<br>Derwent Publications Ltd., London, GB;<br>AN 90-094569<br>& JP-A-2 045 450 (IDEMITSU KOSAN)<br>* Zusammenfassung *<br>--- | 1,2 | |
| P,X | DE-A-3 939 049 (MERCK)<br>* Seite 2, Zeile 3 - Zeile 13 *<br>* Seite 2, Zeile 32 - Seite 3, Zeile 36 *<br>* Seite 11, Zeile 64 - Seite 12, Zeile 9 *<br>* Seite 12, Zeile 42 - Zeile 44 *<br>* Seite 13, Zeile 3 - Zeile 11 *<br>* Ansprüche; Beispiele *<br>--- | 1-6 | **RECHERCHIERTE SACHGEBIETE (Int. Cl.5)**<br>C09K<br>G11B |
| P,X | WO-A-9 200 366 (SECRETARY OF STATE FOR DEFENCE)<br>* Seite 3, Zeile 4 - Zeile 11 *<br>* Seite 4, Zeile 1 - Seite 7, Zeile 5 *<br>* Ansprüche 1-8 *<br>--- | 1-4 | |
| D,A | EP-A-0 399 279 (BASF)<br>* das ganze Dokument *<br>----- | 1,2,7-12 | |

Der vorliegende Recherchenbericht wurde für alle Patentansprüche erstellt

| Recherchenort | Abschlußdatum der Recherche | Prüfer |
|---|---|---|
| DEN HAAG | 25 AUGUST 1992 | PUETZ C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)